(19) **Europäisches Patentamt / European Patent Office / Office européen des brevets**

(11) **EP 4 181 007 B1**

(12) **EUROPEAN PATENT SPECIFICATION**

(45) Date of publication and mention
of the grant of the patent:
**28.01.2026 Bulletin 2026/05**

(21) Application number: **22207655.6**

(22) Date of filing: **15.11.2022**

(51) International Patent Classification (IPC):
*G06F 30/12* (2020.01)    *G06F 30/23* (2020.01)
*G06F 113/24* (2020.01)    *G06F 119/02* (2020.01)
*G06F 119/14* (2020.01)    *G06F 113/26* (2020.01)

(52) Cooperative Patent Classification (CPC):
**G06F 30/12; G06F 30/23;** G06F 2113/24;
G06F 2113/26; G06F 2119/02; G06F 2119/14

(54) **SYSTEMS AND METHODS FOR SEMI-DISCRETE MODELING OF PROGRESSIVE DAMAGE AND FAILURE IN COMPOSITE LAMINATE MATERIALS**

SYSTEME UND VERFAHREN ZUR HALBDISKRETEN MODELLIERUNG VON PROGRESSIVEN SCHÄDEN UND FEHLERN IN VERBUNDLAMINATMATERIALIEN

SYSTÈMES ET PROCÉDÉS DE MODÉLISATION SEMI-DISCRÈTE DE DOMMAGES PROGRESSIFS ET DE DÉFAILLANCES DANS DES MATÉRIAUX STRATIFIÉS COMPOSITES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.11.2021 US 202163279441 P**

(43) Date of publication of application:
**17.05.2023 Bulletin 2023/20**

(73) Proprietor: **The Regents of The University of Michigan**
**Ann Arbor, MI 48109-2590 (US)**

(72) Inventors:
• **NGUYEN, Minh Hoang**
**Ann Arbor, MI 48109-2590 (US)**
• **WAAS, Anthony M.**
**Ann Arbor, MI 48109-2590 (US)**

(74) Representative: **Witte, Weller & Partner**
**Patentanwälte mbB**
**Postfach 10 54 62**
**70047 Stuttgart (DE)**

(56) References cited:

• **NGUYEN MINH HOANG ET AL: "A novel mode-dependent and probabilistic semi-discrete damage model for progressive failure analysis of composite laminates - Part I: Meshing strategy and mixed-mode law", COMPOSITES PART C: OPEN ACCESS, vol. 3, 1 November 2020 (2020-11-01), pages 100073, XP93042337, ISSN: 2666-6820, DOI: 10.1016/j.jcomc.2020.100073**
• **NGUYEN MINH HOANG ET AL: "A novel mode-dependent and probabilistic semi-discrete damage model for progressive failure analysis of composite laminates - Part II: Applications to unnotched and open-hole tensile specimens", COMPOSITES PART C: OPEN ACCESS, vol. 3, 1 November 2020 (2020-11-01), pages 100071, XP93042340, ISSN: 2666-6820, DOI: 10.1016/j.jcomc.2020.100071**
• **NGUYEN MINH HOANG ET AL: "Detailed experimental and numerical investigation of single-edge notched tensile cross-ply laminates", COMPOSITE STRUCTURES, ELSEVIER SCIENCE LTD, GB, vol. 279, 8 October 2021 (2021-10-08), XP086852571, ISSN: 0263-8223, [retrieved on 20211008], DOI: 10.1016/J.COMPSTRUCT.2021.114731**

EP 4 181 007 B1

- NAGARAJ M H ET AL: "Compressive damage modeling of fiber-reinforced composite laminates using 2D higher-order layer-wise models", COMPOSITES PART B, ELSEVIER, AMSTERDAM, NL, vol. 215, 17 March 2021 (2021-03-17), XP086577733, ISSN: 1359-8368, [retrieved on 20210317], DOI: 10.1016/J.COMPOSITESB.2021.108753
- DATABASE COMPENDEX [online] ENGINEERING INFORMATION, INC., NEW YORK, NY, US; 1 February 2022 (2022-02-01), NGUYEN M H [0000-0002-7717-5509] ET AL: "Modeling delamination migration in composite laminates using an enhanced semi-discrete damage model (eSD2M)", Database accession no. E20214711209857
- NGUYEN M H [0000-0002-7717-5509] ET AL: "Modeling delamination migration in composite laminates using an enhanced semi-discrete damage model (eSD2M)", INTERNATIONAL JOURNAL OF SOLIDS AND STRUCTURES 20220201 ELSEVIER LTD GBR, vol. 236-237, 1 February 2022 (2022-02-01), DOI: 10.1016/J.IJSOLSTR.2021.111323
- DATABASE COMPENDEX [online] ENGINEERING INFORMATION, INC., NEW YORK, NY, US; 22 March 2023 (2023-03-22), NGUYEN M H [0000-0002-7717-5509] ET AL: "Numerical study on the effects of ply stacking and interlayer toughening on the failure modes and response of OHT laminates", Database accession no. E20230613568077
- NGUYEN M H [0000-0002-7717-5509] ET AL: "Numerical study on the effects of ply stacking and interlayer toughening on the failure modes and response of OHT laminates", COMPOSITES SCIENCE AND TECHNOLOGY 20230322 ELSEVIER LTD GBR, vol. 234, 22 March 2023 (2023-03-22), DOI: 10.1016/J.COMPSCITECH.2023.109935

**Description**

## FIELD OF THE DISCLOSURE

The present disclosure relates generally to techniques for modeling composite laminate materials and, more particularly, to systems and methods for semi-discrete modeling of progressive damage and failure in composite laminate materials in combination with systems and methods for manufacturing and/or repairing a part using composite laminate materials.

## BACKGROUND

The background description provided herein is for the purpose of generally presenting the context of the disclosure. Work of the presently named inventor, to the extent it is described in this background section, as well as aspects of the description that may not otherwise qualify as prior art at the time of filing, are neither expressly nor impliedly admitted as prior art against the present disclosure.

Fiber reinforced composites are the material of choice for a wide variety of industries where light-weighting is important. This trend is attributed to their specific stiffness, strength, and tailorability. Popular composite material systems are fiber-reinforced thermoset systems due to their excellent mechanical properties and high quality manufacturable products. Available as convenient prepreg tapes, they allow an efficient manufacturing process, especially in combination with the automated fiber placement (AFP) technology. However, despite the advances in material and manufacturing technologies, progressive damage and failure modeling of composite structures still remains a great challenge.

The problem is particularly acute because the failure mechanisms in a composite material are particularly complex due to the presence of different length scales (e.g. micro scale with the fiber and matrix constituents and macro/meso scale with the laminae and interfaces). Given the hierarchical structure, the mechanics of composites is a highly multi-scale problem, which results in a variety of damage and failure modes, including their interactions.

Therefore, there is a need for techniques capable of accurately and efficiently modeling the progressive damage and failure in composite laminate materials to enhance the overall design and resulting capabilities of the composite laminate materials.

Publication "A novel mode-dependent and probabilistic semi-discrete damage model for progressive failure analysis of composite laminates - Part I: Meshing strategy and mixed-mode law" by Minh Hoang Nguyen, Anthony M. Waas, COMPOSITES PART C: OPEN ACCESS, vol. 3, 1 November 2020 (2020-11-01), ISSN: 2666-6820, proposes a semi-discrete damage model (SD2M) for the progressive failure analysis (PFA) of composite structures. The presented method utilizes a separation of fiber and matrix failure modes and introduces a material strength distribution to thin strips of matrix-splitting elements in order to capture the progression of transverse crack density. With the proposed meshing strategy, the discreteness is greatly enhanced, while the model remains efficient and simple by using solely continuum elements. Applications of SD2M to several examples are presented in *"A novel mode-dependent and probabilistic semi-discrete damage model for progressive failure analysis of composite laminates - Part II: Applications to unnotched and open-hole tensile specimens"* by Minh Hoang Nguyen, Anthony M. Waas, COMPOSITES PART C: OPEN ACCESS, vol. 3, 1 November 2020 (2020-11-01), ISSN: 2666-6820.

Publication "Detailed experimental and numerical investigation of single-edge notched tensile cross-ply laminates" by Minh Hoang Nguyen et al., COMPOSITE STRUCTURES, ELSEVIER SCIENCE LTD, GB, vol. 279, 8 October 2021 (2021-10-08), ISSN: 0263-8223, examines failure progression in a cross-ply tensile specimen with a single-edge notch through experiments that provide detailed observations using digital image correlation.

Publication "Compressive damage modeling of fiber-reinforced composite laminates using 2D higher-order layer-wise models" by Nagaraj M. H. et al., COMPOSITES PART B, ELSEVIER, AMSTERDAM, NL, vol. 215, 17 March 2021 (2021-03-17), ISSN: 1359-8368, presents a refined progressive damage analysis of fiber-reinforced laminated composites subjected to compressive loads. A numerical analysis exploits higher-order theories developed using the Carrera Unified Formulation, specifically 2D plate theories with Lagrange polynomials to enhance the kinematic approximation through each ply's thickness resulting in a layer-wise structural model.

## SUMMARY OF THE INVENTION

The invention is defined by the claims.

According to an aspect of the present disclosure, a method for manufacturing and/or repairing a part in accordance with claim 1 is proposed. The method involves a computer implemented method for semi-discrete modeling of progressive damage and failure in composite laminate materials includes receiving, from a user, a fibrous strip width and a fibrous strip spacing. The method further includes creating, by one or more processors, a finite-element (FE) mesh by: generating, using a structured hex meshing algorithm, a plurality of fibrous strips (also referenced herein as "matrix-splitting elements") along a fiber direction based on the fibrous strip width and the fibrous strip spacing, and generating, using a free hex-dominated advancing front meshing algorithm, a bulk element between each of the plurality of fibrous strips, wherein the FE mesh defines a portion of a composite laminate material; and determining, by the one or more processors, a predicted mechanical response of the composite laminate material by: generating a constitutive model corresponding to the composite laminate material based on the FE mesh, and inputting a stress value or a strain value to the constitutive model to generate the predicted mechanical response, and running manufacturing equipment to manufacture the part, wherein at least one fibrous strip is applied in the composite laminate material in response to the predicted mechanical response.

In a variation of this aspect, creating the FE mesh further comprises partitioning the portion of the composite laminate material as distinct from a different portion of the composite laminate material, and seeding the portion of the composite laminate material with a global mesh size. Further in this variation, the portion of the composite laminate material includes a first portion of the composite laminate material and a second portion of the composite laminate material that is different from the first portion.

In another variation of this aspect, each fibrous strip of the plurality of fibrous strips and each bulk element has a corresponding peak stress value and a corresponding peak strain value. Moreover, the method further comprises determining, by the one or more processors, a failure type corresponding to the predicted mechanical response based on each fibrous strip and each bulk element for which the stress value or the strain value exceeded the corresponding peak stress value or the corresponding strain value.

In yet another variation of this aspect, the plurality of fibrous strips is comprised of a corresponding plurality of materials configured to achieve a non-uniform strength distribution of the composite laminate material.

In still another variation of this aspect, the plurality of fibrous strips have a first failure mode and the bulk element has a second failure mode that is different from the first failure mode. Further in this variation, the first failure mode is a matrix splitting failure mode and a fiber failure mode, and the second failure mode is the fiber failure mode.

In yet another variation of this aspect, the constitutive model includes a pre-peak response model, a set of transition criteria, and a post-peak response model. Further in this variation, the pre-peak response model is a Schapery theory model and the post-peak response model is a crack band model.

According to another aspect of the present disclosure, a system for manufacturing and/or repairing a part in accordance with claim 10 is proposed. The system comprises a subsystem for semi-discrete modeling of progressive damage and failure in composite laminate materials comprises a user interface, a memory, and a processor interfacing with the user interface and the memory. The memory stores a set of computer-readable instructions comprising at least a structured hex meshing algorithm and a free hex-dominated advancing front meshing algorithm. The processor is configured to execute the set of computer-readable instructions to cause the processor to receive, by the user interface, a fibrous strip width and a fibrous strip spacing; create a finite-element (FE) mesh by: generating, using the structured hex meshing algorithm, a plurality of fibrous strips along a fiber direction based on the fibrous strip width and the fibrous strip spacing, and generating, using the free hex-dominated advancing front meshing algorithm, a bulk element between each of the plurality of fibrous strips, wherein the FE mesh defines a portion of a composite laminate material; and determine a predicted mechanical response of the composite laminate material by: generating a constitutive model corresponding to the composite laminate material based on the FE mesh, and inputting a stress value or a strain value to the constitutive model to generate the predicted mechanical response. The system further comprises manufacturing equipment configured to manufacture the part, wherein at least one fibrous strip is applied in the composite laminate material in response to the predicted mechanical response

In a variation of this aspect, the set of computer-readable instructions further cause the processor to create the FE mesh by: partitioning the portion of the composite laminate material as distinct from a different portion of the composite laminate material, and seeding the portion of the composite laminate material with a global mesh size. Further in this variation, the portion of the composite laminate material includes a first portion of the composite laminate material and a second portion of the composite laminate material that is different from the first portion.

In another variation of this aspect, each fibrous strip of the plurality of fibrous strips and each bulk element has a corresponding peak stress value and a corresponding peak strain value. Moreover, the set of computer-readable instructions further cause the processor to: determine a failure type corresponding to the predicted mechanical response based on each fibrous strip and each bulk element for which the stress value or the strain value exceeded the corresponding peak stress value or the corresponding strain value.

In yet another variation of this aspect, the plurality of fibrous strips is comprised of a corresponding plurality of materials configured to achieve a non-uniform strength distribution of the composite laminate material.

In still another variation of this aspect, the plurality of fibrous strips have a first failure mode and the bulk element has a second failure mode that is different from the first failure mode, wherein the first failure mode is a matrix splitting failure mode and a fiber failure mode, and wherein the second failure mode is the fiber failure mode.

In yet another variation of this aspect, the constitutive model includes a pre-peak response model, a set of transition criteria, and a post-peak response model, and wherein the pre-peak response model is a Schapery theory model

and the post-peak response model is a crack band model.

According to yet another aspect of the present disclosure, a non-transitory computer-readable storage medium according to claim 13 has stored thereon a set of instructions, executable by at least one processor, for semi-discrete modeling of progressive damage and failure in composite laminate materials. The instructions comprise instructions for receiving, from a user, a fibrous strip width and a fibrous strip spacing; instructions for creating a finite-element (FE) mesh by: generating, using a structured hex meshing algorithm, a plurality of fibrous strips along a fiber direction based on the fibrous strip width and the fibrous strip spacing, and generating, using a free hex-dominated advancing front meshing algorithm, a bulk element between each of the plurality of fibrous strips, wherein the FE mesh defines a portion of a composite laminate material; and instructions for determining a predicted mechanical response of the composite laminate material by: generating a constitutive model corresponding to the composite laminate material based on the FE mesh, and inputting a stress value or a strain value to the constitutive model to generate the predicted mechanical response; and instructions for causing manufacturing equipment to manufacture a part comprising a respective composite laminate material, wherein at least one fibrous strip in the respective composite laminate material is based on the predicted mechanical response.

In a variation of this aspect, the instructions further comprise creating the FE mesh by: partitioning the portion of the composite laminate material as distinct from a different portion of the composite laminate material, and seeding the portion of the composite laminate material with a global mesh size. The portion of the composite laminate material includes a first portion of the composite laminate material and a second portion of the composite laminate material that is different from the first portion.

In another variation of this aspect, each fibrous strip of the plurality of fibrous strips and each bulk element has a corresponding peak stress value and a corresponding peak strain value. Moreover, the instructions further comprise: instructions for determining a failure type corresponding to the predicted mechanical response based on each fibrous strip and each bulk element for which the stress value or the strain value exceeded the corresponding peak stress value or the corresponding strain value.

In yet another variation of this aspect, the plurality of fibrous strips have a first failure mode and the bulk element has a second failure mode that is different from the first failure mode, wherein the first failure mode is a matrix splitting failure mode and a fiber failure mode, and wherein the second failure mode is the fiber failure mode.

## BRIEF DESCRIPTION OF THE DRAWINGS

The figures described below depict various aspects of the system and methods disclosed herein. It should be understood that each figure depicts an embodiment of a particular aspect of the disclosed system and methods, and that each of the figures is intended to accord with a possible embodiment thereof. Further, wherever possible, the following description refers to the reference numerals included in the following figures, in which features depicted in multiple figures are designated with consistent reference numerals.

FIG. 1A illustrates an example system for semi-discrete modeling of progressive damage and failure in composite laminate materials, in accordance various aspects disclosed herein.

FIG. 1B illustrates an example workflow for semi-discrete modeling of progressive damage and failure in composite laminate materials utilizing several components from the example system of FIG. 1A, and in accordance various aspects disclosed herein.

FIG. 2A illustrates an example free meshing of bulk elements included as part of a composite laminate material, as utilized by the example system of FIG. 1A, and in accordance with various aspects disclosed herein.

FIG. 2B illustrates an example structure aligned meshing of fibrous strips and bulk elements included as part of a composite laminate material, as utilized by the example system of FIG. 1A, and in accordance with various aspects disclosed herein.

FIG. 2C illustrates an example discrete meshing of fibrous strips and bulk elements included as part of a composite laminate material, as utilized by the example system of FIG. 1A, and in accordance with various aspects disclosed herein.

FIG. 2D is an example generation sequence of a semi-discrete meshing of fibrous strips and bulk elements included as part of a composite laminate material, as generated by the example system of FIG. 1A, and in accordance with various aspects disclosed herein.

FIG. 3A illustrates an example partitioning of a composite laminate material model, in accordance with various aspects disclosed herein.

FIG. 3B illustrates an example seeding of a composite laminate material model, in accordance with various aspects disclosed herein.

FIG. 3C illustrates an example meshing of a composite laminate material model, in accordance with various aspects disclosed herein.

FIG. 4 is an example graph illustrating a general pre-peak and post-peak stress-strain response of a composite laminate material, in accordance with various aspects disclosed herein.

FIG. 5A illustrates a fiber failure plane used to inform the constitutive model for a composite laminate material, and in accordance with various aspects disclosed herein.

FIG. 5B illustrates a first matrix failure plane used to inform the constitutive model for a composite laminate material, and in accordance with various aspects disclosed herein.

FIG. 5C illustrates a second matrix failure plane used to inform the constitutive model for a composite laminate material, and in accordance with various aspects disclosed herein.

FIG. 6 illustrates an example method for semi-discrete modeling of progressive damage and failure in composite laminate materials, in accordance various aspects disclosed herein.

## DETAILED DESCRIPTION

Numerous computational physics-based models, usually implemented using the finite-element (FE) method, have been developed in the past two decades to predict the progressive damage and failure of composite materials. However, each of these conventional techniques generally suffers from a trade-off between a lack of discreteness resolution and/or consuming a large amount of computational resources.

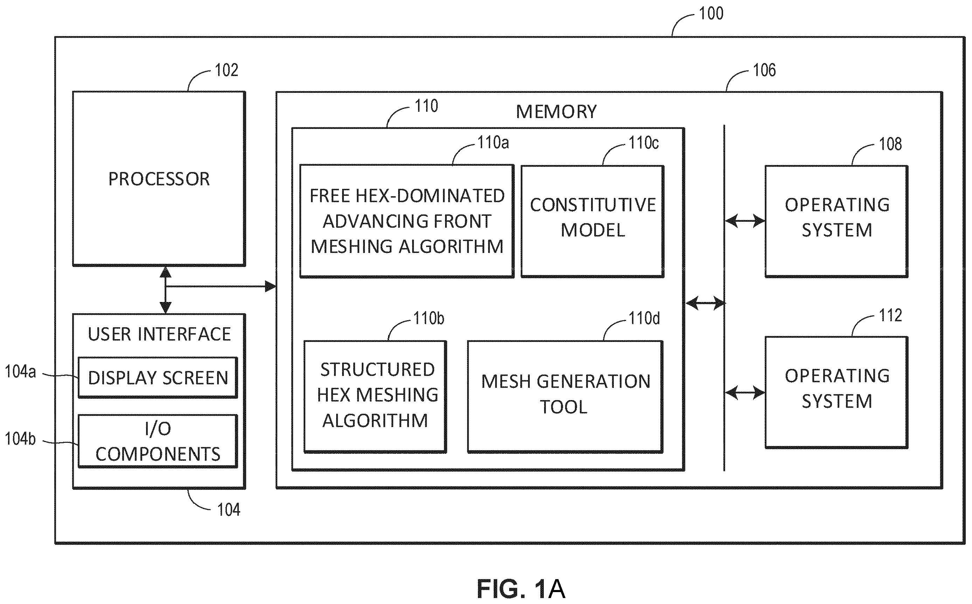

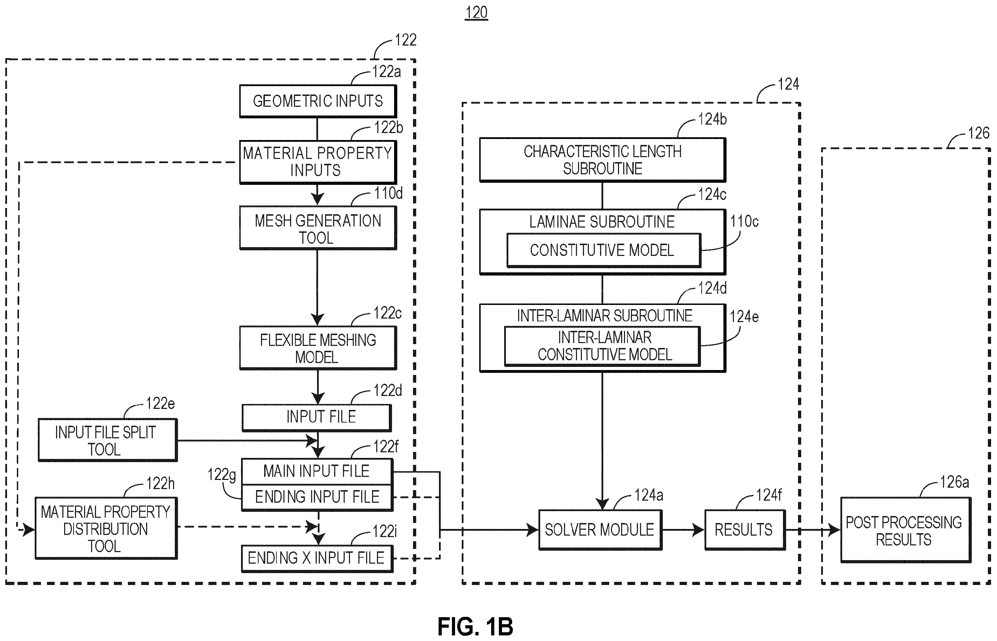

By contrast, the systems and methods of the present disclosure provide a semi-discrete damage model that solves these problems experienced by conventional techniques. Namely, the systems and methods of the present disclosure can accurately and efficiently model the progressive damage and failure in composite laminate materials to enhance the overall design and resulting capabilities of the composite laminate materials. To provide a general understanding of the system(s)/components utilized in the techniques of the present disclosure, FIGs. 1A and 1B illustrate, respectively, an example system 100 and an example workflow 120 utilizing several components of the system 100 that are configured for semi-discrete modeling of progressive damage and failure in composite laminate materials. Accordingly, FIG. 1A provides a general overview of the components, and FIG. 1B describes several of the components and their respective functions in greater detail.

In any event, FIG. 1A illustrates an example system 100 for semi-discrete modeling of progressive damage and failure in composite laminate materials. It should be appreciated that the example system 100 is merely an example and that alternative or additional components are envisioned.

As illustrated in FIG. 1A, the example system 100 may be a user computing device and/or a server that includes a processor 102, a user interface 104, and a memory 106. The memory 106 may store an operating system 108 capable of facilitating the functionalities as discussed herein, as well as other data 112, and a composite laminate modeling application 110 including a free hex-dominated advancing front meshing algorithm 110a, a structured hex meshing algorithm 110b, a constitutive model 110c, and a mesh generation tool 110d. Generally, the processor 102 may interface with the memory 106 to access/execute the operating system 108, the other data 112, the free hex-dominated advancing front meshing algorithm 110a, the structured hex meshing algorithm 110b, the constitutive model 110c, and the mesh generation tool 110d. The other data 112 may include a set of applications configured to facilitate the functionalities as discussed herein, and/or may include other relevant data, such as display formatting data, etc. For example, the processor 102 may access the operating system 108 in order to execute applications included as part of the other data 112, such as a modeling application (not shown) configured to facilitate functionalities associated with semi-discrete modeling of progressive damage and failure in composite laminate materials, as discussed herein. In certain aspects, the free hex-dominated advancing front meshing algorithm 110a, the structured hex meshing algorithm 110b may be provided and/or executed by a suitable commercial software package, such as ABAQUS/CAE, or the like. It should be appreciated that one or more other applications are envisioned. Moreover, it should be understood that any processor (e.g., processor 102), user interface (e.g., user interface 104), and/or memory (e.g., memory 106) referenced herein may include one or more processors, one or more user interfaces, and/or one or more memories.

Generally, the processor 102 may access the memory 106 to execute the mesh generation tool 110d in order to automatically create, partition, and mesh the various portions of a composite laminate material (e.g., plies and interlayers). As described herein, the mesh generation tool 110d may also define and assign material properties, tie portions of the composite laminate material together, and define surfaces, contact interactions, boundary conditions, steps, mass scaling, and output requests. The mesh generation tool 110d may receive a strip width and a strip spacing from a user, and may proceed to partition the material base, such that thin strips of elements (also referenced herein as "element strips", "fibrous strips", and "strips") with the specified strip width are generated along a fiber direction with the specified strip spacing separating each respective element strip. The mesh generation tool 110d may also access or otherwise include instructions that cause the processor 102 to execute the structured hex meshing algorithm 110b and/or the free hex-dominated advancing front meshing algorithm 110a in order to create the meshing within the element strips and the bulk elements separating the element strips. The completed composite laminate material model may then be analyzed in accordance with the constitutive model 110c to determine a predicted mechanical response and/or a predicted failure type of the composite laminate material.

More specifically, the structured hex meshing algorithm 110b may receive a fibrous strip width and a fibrous strip spacing from a user to determine a type and distribution of fibrous strips as part of a finite element (FE) mesh. The structured hex meshing algorithm 110b may generate a randomized distribution of fibrous strip materials, such that adjacent fibrous strips may be comprised of different fibrous strip materials. However, the structured hex meshing algorithm 110b may generate each fibrous strip at the fibrous strip spacing apart from each adjacent fibrous strip, and the algorithm 110b may generate each fibrous strip with a uniform width, as defined by the user-provided fibrous strip width. Moreover, the structured hex meshing algorithm 110b may generate each of the fibrous strips in a fiber direction, such that the fibrous strip spacing may be maintained between each set of adjacent fibrous strips. Additionally, or alternatively, in certain aspects, the structured hex meshing algorithm 110b may generate fibrous strips in a perpendicular and/or otherwise different direction than the fiber direction.

The free hex-dominated advancing front meshing algorithm 110a may generally receive the FE mesh populated with the fibrous strips from the structured hex meshing algorithm 110b to determine a distribution of bulk elements between each of the fibrous strips. The free hex-dominated advancing front meshing algorithm 110a may implement any suitable type of meshing procedure in accordance with any suitable free mesh algorithm (e.g., sweep mesh with advancing front algorithm). In certain aspects, the free hex-dominated advancing front meshing algorithm 110a and/or the structured hex meshing algorithm 110b may generate a mesh corresponding to the strip elements and/or the bulk elements. For example, regions of the strip elements that include a complex geometry (e.g., near a hole or cut-out) may be meshed using any suitable free mesh technique from the free hex-dominated advancing front meshing algorithm 110a, while regions of the same strip elements that include a less complex geometry may be meshed using a structured hex meshing technique from the structured hex meshing algorithm 110b. As another example, regions of the composite laminate material (e.g., strip elements and bulk elements) that include a less complex geometry (e.g., far from holes, cut-outs, etc.) may be meshed using either a free mesh technique or a structured meshing technique.

Based on the completed FE mesh resulting from the outputs of the structured hex meshing algorithm 110b and the free hex-dominated advancing front meshing algorithm 110a, the constitutive model 110c may describe the mechanical response of the composite laminate material represented by the completed FE mesh under various stresses and strains. In particular, the constitutive model 110c may describe the mechanical response of the composite laminate material represented by the completed FE mesh using a set of pre-peak conditions (prior to mechanical failure), transition criteria (at the point of mechanical failure), and post-peak conditions (after mechanical failure). All regions of the FE mesh may be modeled with pre-peak non-linearity, but the failure modes of the FE mesh may be separated out into two distinct domains including matrix splitting failure and fiber failure. For example, matrix splitting failure may be only active in the fibrous strips, while fiber failure may be active in every element (e.g., fibrous strips and bulk elements). In fact, by reducing the width of the matrix-splitting strips, the discreteness of the method is highly increased (approaching discrete methods), while the efficiency is maintained by using only continuum elements with smeared crack damage methods (e.g., crack band) for the post-peak failure. Nevertheless, in certain aspects, the failure modes of the FE mesh may not be separated between the fibrous strips and the bulk elements, such that matrix splitting failure and fiber failure may be active in both the fibrous strips and the bulk elements.

In this manner, the combination of the structured hex meshing algorithm 110b, the free hex-dominated advancing front meshing algorithm 110a, the constitutive model 110c, and the mesh generation tool 110d decomposes the bulk non-linearity and localization zones of the composite laminate material and provides for a proper load transfer pathway through the resulting FE mesh. Consequently, subsequent manufacturing of composite laminate materials may be improved by incorporating the distribution, sizing, spacing, material composition, etc. of the fibrous strips and bulk elements provided in the material models output by the composite laminate modeling application 110. For example, the composite laminate modeling application 110 may be stored in a computing device of a composite laminate material manufacturing plant, and the computing device may run the composite laminate modeling application 110 prior to a run of the manufacturing equipment to determine optimal material characteristics for a particular use-case. Based on the material characteristics (e.g., fibrous strip and bulk element distribution, sizing, spacing, material composition, etc.) output in a material model by the composite laminate modeling application 110, the manufacturing equipment may manufacture a composite laminate material with those material characteristics to produce an optimally configured composite laminate material for the particular use-case.

Moreover, the mesh generation tool 110d allows a user to quickly and easily adjust the output material model by refining the mesh, adjusting material properties, analysis parameters, and the like without disrupting other aspects of the model. For example, and as discussed further herein, the material model may be split into multiple parts (e.g., files), such that the user may adjust portions of the model confined to a particular file without affecting the other files. As a result, the tool 110d also enables large numbers of simulations to be run for a particular mesh by randomizing the material properties of the mesh without affecting the previously generated mesh.

In any event, the memory 106 may include one or more forms of volatile and/or non-volatile, fixed and/or removable memory, such as read-only memory (ROM), electronic programmable read-only memory (EPROM), random access memory (RAM), erasable electronic programmable read-only memory (EEPROM), and/or other hard drives, flash memory, MicroSD cards, and others.

The example system 100 may further include a user interface 104 configured to present/receive information to/from a user. As shown in FIG. 1A, the user interface 104 may include a display screen 104a and I/O components 104b (e.g., ports, capacitive or resistive touch sensitive input panels, keys, buttons, lights, LEDs). According to some aspects, a user may access the example system 100 via the user interface 104 to review outputs from the free hex-dominated advancing front meshing algorithm 110a, the structured hex meshing algorithm 110b, the constitutive model 110c, make various selections, and/or otherwise interact with the example system 100.

In some aspects, the example system 100 may perform the functionalities as discussed herein as part of a "cloud" network or may otherwise communicate with other hardware or software components within the cloud to send, retrieve, or otherwise analyze data. Thus, it should be appreciated that the example system 100 may be in the form of a distributed cluster of computers, servers, machines, or the like. In this implementation, a user may utilize the distributed example system 100 as part of an on-demand cloud computing platform. Accordingly, when the user interfaces with the example system 100 (e.g., by inputting a fibrous strip width and/or fibrous strip spacing), the example system 100 may actually interface with one or more of a number of distributed computers, servers, machines, or the like, to facilitate the described functionalities.

In certain aspects, the example system 100 may communicate and interface with an external server (not shown) via a network(s). The external server may be associated with, for example, an entity that fabricates and/or otherwise purchases composite laminate materials, and may receive the completed FE mesh and/or constitutive model from the example system 100. In particular, the external server may include or support a web server configured to host a website that enables users to submit instructions to the example system 100 for generating the completed FE mesh and/or the constitutive model. For example, the external server may enable a user to submit the fibrous strip width and the fibrous strip spacing that the example system 100 may use to generate the completed FE mesh and constitutive model.

Further in these aspects, the network(s) used to connect the example system 100 to the external server may support any type of data communication via any standard or technology (e.g., GSM, CDMA, TDMA, WCDMA, LTE, EDGE, OFDM, GPRS, EV-DO, UWB, Internet, IEEE 802 including Ethernet, WiMAX, Wi-Fi, Bluetooth, and others). Moreover, the external server may include a memory as well as a processor, and the memory may store an operating system capable of facilitating the functionalities as discussed herein as well as the free hex-dominated advancing front meshing algorithm 110a, the structured hex meshing algorithm 110b, and the constitutive model 110c.

Additionally, it is to be appreciated that a computer program product in accordance with an aspect may include a computer usable storage medium (e.g., standard random access memory (RAM), an optical disc, a universal serial bus (USB) drive, or the like) having computer-readable program code embodied therein, wherein the computer-readable program code may be adapted to be executed by the processor(s) 102 (e.g., working in connection with the operating system 108) to facilitate the functions as described herein. In this regard, the program code may be implemented in any desired language, and may be implemented as machine code, assembly code, byte code, interpretable source code or the like (e.g., via Golang, Python, Scala, C, C++, Java, Actionscript, Objective-C, Javascript, CSS, XML). In some aspects, the computer program product may be part of a cloud network of resources.

FIG. 1B illustrates an example workflow 120 for semi-discrete modeling of progressive damage and failure in composite laminate materials utilizing several components from the example system of FIG. 1A, and in accordance various aspects disclosed herein. Generally, the example workflow 120 depicts the flow of data from a user through a pre-processing stage 122, a processing stage 124, and a post-processing stage 126, wherein a composite laminate material mesh is generated, analyzed, and the results are displayed for user interpretation/evaluation.

The example workflow 120 begins with the pre-processing stage 122, where a user may input the geometric inputs 122a and the material property inputs 122b. The geometric inputs 122a may include, for example, the shape and dimensions of the composite laminate material (including any cut-outs such as notches or holes), the strip width and spacing, the ply stacking sequence (the "layup"), and/or any other suitable values or combinations thereof. The material property inputs 122b may include the material properties of the composite laminate material, such as, for example, ply thickness, ply elastic properties, Schapery parameters, strength values, fracture toughness values, and/or any other suitable values or combinations thereof. Further, the material property inputs 122b may include strength distribution parameters corresponding to the transverse and shear strengths of the composite material, so that each strip may be may be assigned a randomized material strength during the processing stage 124.

Once these inputs 122a, 122b are received, the mesh generation tool 110d may automatically generate the flexible meshing model 122c. As previously mentioned, the mesh generation tool 110d may create any layers associated with the model 122c, partition the layers, and mesh the parts of the layers (e.g., the plies and interlayers). Moreover, the tool 110d may automatically define and assign random material properties, and may define surfaces, contact interactions, boundary conditions, steps, mass scaling, and output requests corresponding to the flexible meshing model 122c. When the flexible meshing model 122c is generated, the model 122c may write an input file 122d that comprises an executable file containing all definitions and defined parameters associated with the model 122c to be evaluated at the processing stage 124.

However, prior to processing, the input file 122d may be split into multiple portions that include different aspects of the original input file 122d. Generally, large models may have correspondingly large input files (e.g., input file 122d), so it may be more efficient and create a more user-friendly, easier access experience to separate the mesh portion of the input file 122d from the material definition portion of the file 122d. Thus, the input file split tool 122e may split the input file 122d into a main input file 122f and an ending input file 122g. The main input file 122f may include mesh definition components, such as element connectivity, nodal coordinates, set definition, surface definitions, sections assignments, and/or any other suitable components or combinations thereof. The ending input file 122g may include constraints, section controls, material definitions, and step definitions, such as boundary conditions, loading, mass scaling, output requests, and/or any other suitable definitions or combinations thereof.

Moreover, in certain aspects, the input file split tool 122e may modify the input files 122f, 122g to define interior surfaces of the plies that are included in the general contact interaction to prevent inter-penetration of elements. In some aspects, the input file split tool 122e may modify the input files 122f, 122g by adding keywords specifying that the characteristic length of the continuum elements is defined in the processing stage 124 (e.g., by characteristic length subroutine 124b).

In any event, when the main input file 122f and the ending input file 122g are generated and modified appropriately, the files 122f, 122g may be analyzed by the solver module 124a as part of the processing stage 124. However, a strength of this workflow 120 is the possibility to perform an uncertainty quantification by running a large number of simulations without editing the mesh (e.g., as included in the main input file 122f). In order to perform such a large number of simulations, the material property distribution tool 122h may receive some/all of the material property inputs 122b, and may edit the ending input file 122g by randomizing the material properties included therein, thereby producing the ending x input file 122i. The material property distribution tool 122h may generate any suitable number of ending x input files 122i in order to create a plethora of randomized material property distributions featuring the same mesh (e.g., as included in the main input file 122f), but that have distinct matrix mode strength distributions by sampling new values from the associated probability distributions (e.g., Monte-Carlo simulations). It should be understood that the input file split tool 122e and the material property distribution tool 122h may be optional components of the example workflow 120, and that similar functionality may be achieved using, for example, a suitable code configured to modify the material definitions within a commercial software package (e.g., ABAQUS/CAE) in which the mesh generation tool 110d may be executed. Regardless, when transitioning to the processing stage 124, the main input file 122f and one of the ending input file 122g and an ending x input file 122i are selected as inputs to the solver module 124a to perform a simulation.

As part of the processing stage 124, the solver module 124a may utilize each of the characteristic length subroutine 124b, the laminae subroutine 124c (including the constitutive model 110c), and the inter-laminar subroutine 124d to generate the results 124f. The solver module 124a may use the characteristic length subroutine 124b in order to determine the characteristic length of each continuum element. The solver module 124a may utilize the laminae subroutine 124c and the inter-laminar subroutine 124d to determine the material constitutive behavior of the intra-laminar materials and the inter-laminar materials, respectively. It should be understood that the solver module 124a may utilize additional files not shown in FIG. 1B, such as supplementary routines for calculation of internal variables, solving equations to determine the micro damage (e.g., Schapery) parameter.

More specifically, the laminae subroutine 124c may include the constitutive model 110c, which may combine Schapery theory, failure criteria, and mixed-mode crack band in order to model the effects of intra-laminar stress and strain conditions on the composite laminate material. The laminae subroutine 124c may also implement element-wise global-local randomization to further randomize material properties of the composite laminate material by a scaling factor. The subroutine 124c may apply the scaling locally, for example, at every integration point of every element, and the scaling factor may be calculated using a global field function based on the coordinates within the model. This randomization may be applied by the laminae subroutine 124c particularly to randomize the strip element strengths, bulk element properties, and may also be applied to elastic properties, interlayer properties, and even properties within individual strip elements. Additionally, the inter-laminar subroutine 124d may include an inter-laminar constitutive model 124e that generally models the effects of inter-laminar stress and strain conditions on the composite laminate material. In certain aspects, the inter-laminar constitutive model 124e may be included as part of the constitutive model 110c.

When the solver module 124a has applied/utilized each subroutine 124b, 124c, 124d, the module 124a may output the results 124f for analysis/evaluation during the post-processing stage 126. In particular, the results 124f as displayed to a user may include the post-processing results 126a, including the mechanical response of the composite laminate material under the simulated stresses and strains during the execution of the solver module 124a, and the failure progression of any failures within the composite laminate material as a result of the stresses and strains simulated by the solver module 124a exceeding the material tolerances. For example, the post-processing results 126a may include plots, graphs, charts, and/or any other suitable display configured to illustrate the mechanical response, the failure progression, and/or any other suitable result or combinations thereof for a user.

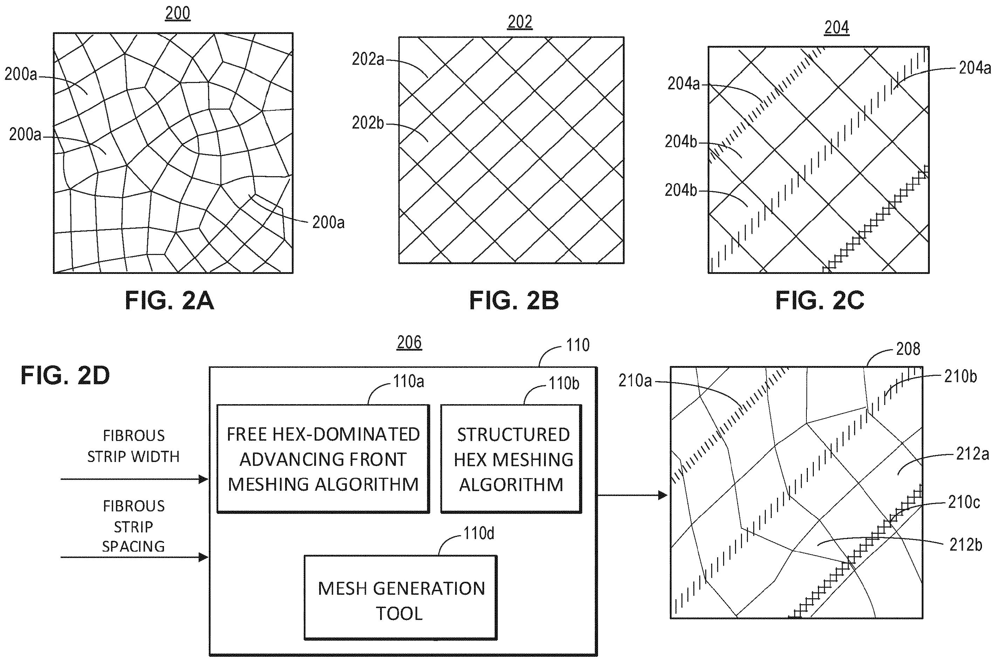

In order to generate the FE mesh, the systems and methods of the present disclosure may utilize multiple modeling techniques (e.g., meshes). For example, each of FIGs. 2A-2C illustrate various meshes and/or meshing techniques that may be utilized as part of the techniques of the present disclosure. Namely, FIG. 2A illustrates an example free meshing 200 of bulk elements 200a included as part of a composite laminate material, as utilized by the example system of FIG. 1A, and in accordance with various aspects disclosed herein. Generally, the bulk elements 200a illustrated in FIG. 2A may constitute a large portion (e.g., a majority) of the resulting composite laminate material, and may be disposed in between any fibrous strips. As previously mentioned, the bulk elements 200a between the matrix-splitting strips may not fail in matrix modes. As a result, and as illustrated in FIG. 2A, the bulk elements 200a may have arbitrary shapes, such that a free mesh can be used for most of the elements comprising the FE mesh. This significantly reduces the processing resources/time that are otherwise necessary to produce a well-defined shape for the bulk elements 200a, and by extension, the completed FE mesh. Regardless, as previously mentioned, the arbitrary shapes comprising the bulk elements 200a may be generated using a structured mesh (e.g., by the structured hex meshing algorithm 110b) and/or a free mesh (e.g., by the free hex-dominated advancing front meshing algorithm 110a) based on the geometry of the region of the composite laminate material in which the bulk elements 200a are located. In certain aspects, the element size of the bulk elements 200a are allowed to exceed the Bazant limit required in the transverse direction. As a result, only the Bazant limit for the fiber-direction may be required.

FIG. 2B illustrates an example structure aligned meshing 202 of fibrous strips 202a and bulk elements 202b included as part of a composite laminate material, as utilized by the example system of FIG. 1A, and in accordance with various aspects disclosed herein. As illustrated in FIG. 2B, the fibrous strips 202a are each generated in a uniform direction, and at a uniform spacing. Additionally, the bulk elements 202b may be uniformly generated such that each bulk element 202b has substantially similar and/or identical dimensions and each fibrous strip 202a may be separated from an adjacent strip by the width of a single bulk element 202b.

FIG. 2C illustrates an example discrete meshing 204 of fibrous strips 204a and bulk elements 204b included as part of a composite laminate material, as utilized by the example system of FIG. 1A, and in accordance with various aspects disclosed herein. As illustrated in FIG. 2C, the fibrous strips 204a are each generated in a uniform direction, and at a uniform spacing. Additionally, the bulk elements 204b may be uniformly generated such that each bulk element 204b has substantially similar and/or identical dimensions and each fibrous strip 204a may be separated from an adjacent strip by the width of multiple bulk elements 204b (illustrated in FIG. 2C as two bulk elements 204b).

FIG. 2D is an example generation sequence 206 of a semi-discrete meshing 208 of fibrous strips and bulk elements included as part of a composite laminate material, as generated by portions of the example system of FIG. 1A, and in accordance with various aspects disclosed herein. For ease of discussion, it is to be understood that the composite laminate modeling application 110 and each of the elements included therein (e.g., free hex-dominated advancing front meshing algorithm 110a, structured hex meshing algorithm 110b, and the mesh generation tool 110d) may be executed by one or more processors (e.g., processor 102) in order to perform the actions described herein.

As illustrated in FIG. 2D, the composite laminate modeling application 110 may receive a fibrous strip width and a fibrous strip spacing from a user, and the application 110 may then output the semi-discrete meshing 208 using the mesh generation tool 110d, which may itself access or otherwise include instructions causing the processors to execute the free hex-dominated advancing front meshing algorithm 110a and the structured hex meshing algorithm 110b. The user may select a small fibrous strip width relative to the overall size of the composite laminate material and/or the bulk elements 212a, 212b in order to enhance the discreteness and sharpness of the resulting matrix cracks, as described herein.

The mesh generation tool 110d may then partition the meshing 208, such that the each of the fibrous strips 210a, 210b, 210c are generated along the fiber direction (not shown) with the fibrous strip spacing in between each strip. The mesh generation tool 110d may also generate the bulk elements 212a, 212b between the fibrous strips 210a, 210b, 210c, and both the bulk elements 212a, 212b and the fibrous strips 210a, 210b, 210c may be generated using either structured and/or free meshing techniques, as described further herein. However, it should be appreciated that the fibrous strips (e.g., fibrous strips 202a, 204a, 210a, 210b, 210c) described herein may follow any suitable fiber path, such as 3D fiber paths that include a 3D curve, and the mesh generation tool 110d may partition the fibrous strips along the corresponding 3D curve. For example, fibrous strip 210a may be a steered fiber strip placed within the composite laminate by robotic automation and/or a portion of a tow (bundle of fibers) that collectively follows a 3D curve. In this example, the mesh generation tool 110d may define partitions along the 3D fiber path which the fibrous strip 210a follows.

Moreover, during the partitioning process, the mesh generation tool 110d may define each fibrous strip 210a, 210b, 210c as a cell, which may be further defined as a geometric set. Each fibrous strip 210a, 210b, 210c that is part of a particular geometric set may be assigned the same material properties. Accordingly, the mesh generation tool 110d may assign each fibrous strip 210a, 210b, 210c (and/or each unique geometric set of strips) a unique randomized strength property, such as transverse and shear strength, in order to achieve a random material strength distribution throughout the composite laminate material.

Generally, a realistic composite laminate material may have randomized strength properties throughout the material. Thus, for the composite laminate modeling application 110 to model the material as realistically as possible, the strength properties of the FE mesh may be randomized throughout the specimen. This may be justified by experimental observations on the progressive nature of crack accumulation (e.g. in a cross-ply tensile test), which have indicated an increase of transverse crack density with rising axial strain.

Crack accumulation may be progressive for several reasons, each of which may be accounted for by the composite laminate modeling application 110 during the development of the semi-discrete meshing 208. Once a crack develops within the composite laminate material, the stresses near that crack may relax and rise away slowly according to shear lag theory, such that no other crack may occur within a certain shear lag length of the crack. These matrix cracks usually provide stress concentrations at ply-interfaces for delamination to initiate, which redistributes and relaxes the stresses around a transverse crack. Further, the inherent nonuniformity of the composite laminate material causes the strength of the material to vary spatially. In fact, strength values measured in lamina tests may be the lower bound of an actual material strength distribution.

Conventionally, a meso-scale model can capture only a few of these effects with limited fidelity. In order to capture the shear lag effect and its strain and stress gradients within a small length scale, a very fine mesh in the in-plane and thickness directions would be required. Some conventional techniques use micro-mechanical models with explicit modeling of fibers and matrix, to capture the onset and propagation of matrix cracks. However, using these methods lead to an unreasonable computation cost associated with coupon or structural level modeling.

Most of the conventional numerical models may capture transverse cracks, but are not suited for a progressive failure analysis of actual composite structures. Typically, one element per width is used, and this issue becomes more complicated in a FE mesh of a realistically-sized problem having multi-dimensionality (e.g., having elements in x- and y-directions). If applying a distribution to all elements in a generic mesh with multiple elements along the width and length direction, the same progression of transverse cracking cannot be achieved.

Practically speaking, the stress along the width and length direction of a composite laminate material is almost uniform. If a row of elements along the width direction is assigned with a distribution, there is a high probability that one of the elements has a low strength due to the distribution. This probability increases with the number of elements, and as a result, there is a high probability that multiple cracks will occur at the same time at an applied strain within a few increments. To overcome this issue, the composite laminate modeling application 110 employs a separation of failure modes when generating the semi-discrete meshing 208, where the strength for matrix cracking may be distributed along the 22-direction only (e.g., perpendicular to the matrix cracks).

Moreover, the type of probability distribution may be carefully chosen for the FE mesh generated by the composite laminate modeling application 110. The semi-discrete meshing 208 may include a finite number of elements, such that it is difficult to capture the tails of a probability distribution (e.g. Weibull or Gaussian). Capturing the left tail is important, as it represents the weak locations in the corresponding composite laminate material. Thus, the composite laminate modeling application 110 may utilize a uniform distribution, which may be further justified because the semi-discrete meshing 208 may include evenly spaced fibrous strips 210a, 210b, 210c. Each of the fibrous strips 210a, 210b, 210c may represent a weakest material point within a band around that strip. If that band of material points within a probabilistic distribution is reduced to a strip, the overall distribution (applied to the fibrous strips) may be altered. In fact, the choice of a uniform probability density function (PDF) may provide a high degree of alignment with experimental data to an extent that is otherwise unachievable with conventional techniques. Regardless, it should be understood that any suitable probability density function may be used within the composite laminate modeling application 110.

In any event, the semi-discrete meshing 208 may include a first fibrous strip 210a, a second fibrous strip 210b, and a third fibrous strip 210c. Each of the first, second, and third fibrous strips 210a, 210b, 210c may be comprised of different materials (indicated by different patternings). Of course, it will be appreciated that each of the fibrous strips 210a, 210b, 210c may be comprised of similar materials, identical materials, and/or any other suitable materials or combinations thereof. Regardless, the composite laminate modeling application 110 may randomize the material distribution of each of the fibrous strips 210a, 210b, 210c, such that the different materials used to comprise the fibrous strips may be randomly distributed throughout the resulting FE mesh. In this manner, the strength properties of the FE mesh may be randomized to more accurately reflect a realistic modeling of a tangible composite laminate material.

The semi-discrete meshing 208 may also include bulk elements 212a, 212b including a first bulk element 212a and a second bulk element 212b. As illustrated in FIG. 2D, the bulk elements 212a, 212b may have non-uniform shapes, such that the first bulk element 212a has a different dimensionality from the second bulk element 212b. Similarly, the composite laminate modeling application 110 (e.g., the free hex-dominated advancing front meshing algorithm 110a) may generate each of the bulk elements 212a, 212b included as part of the semi-discrete meshing 208 with different individual dimensions without violating the fibrous strip spacing specified by the user. Thus, each individual bulk element (e.g., first bulk element 212a, second bulk element 212b) may have unique/different dimensions, but the fibrous strip spacing between the fibrous strips 210a, 210b, 210c may remain constant.

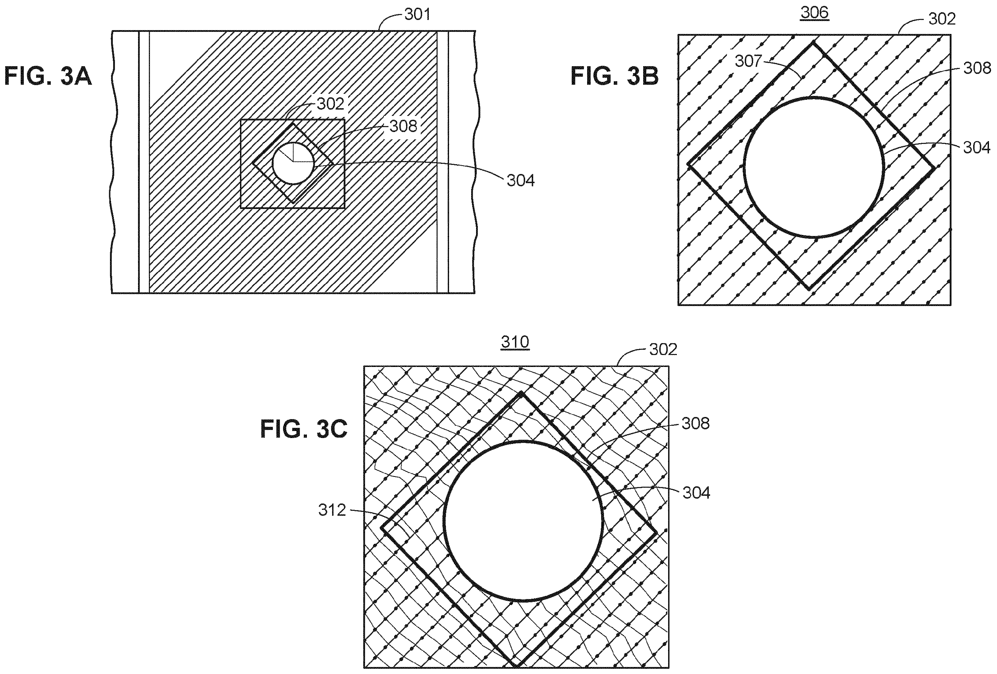

In order to generate the semi-discrete meshing 208, the composite laminate modeling application 110 may perform multiple actions, as illustrated in FIGs. 3A-3C. Generally, the example mesh generation illustrated by FIGs. 3A-3C includes several primary steps, and features a composite laminate material model with an open hole (referenced herein as a "material specimen" and/or the "specimen"). First, the material specimen is partitioned into elastic and fiber-aligned regions, between which a small mesh transition region is created (e.g., illustrated in FIG. 3A). The material specimen is then seeded with a global mesh size, which is allowed to exceed the Bazant limit for transverse cracks (e.g., illustrated in FIG. 3B). The material specimen is then meshed with a refined mesh within the region specified during partitioning, in accordance with the seeding (e.g., illustrated in FIG. 3C). Specifically, FIG. 3A illustrates an example partitioning 300 of a composite laminate material model 301, FIG. 3B illustrates an example seeding 306 of the composite laminate material model 301, and FIG. 3C illustrates an example meshing 308 of the composite laminate material model 301.

As illustrated in FIG. 3A, the example partitioning 300 includes a composite laminate material model 301, an inner portion 302, an interior hole 304, and a partition portion 308. Generally, the example partitioning 300 includes assigning mesh controls and random material properties to the elements included within the partition portion 308. For example, the fibrous strips included within the composite laminate material model 301 are created by partitioning along the fiber-direction. The structured hex meshing algorithm 110b may assign the fibrous strips that are created with randomized material properties. Thereafter, the algorithm (e.g., structured hex meshing algorithm 110b) may generate a cut-out of an arbitrary shape and add the shape to the composite laminate material model 301, while maintaining the semi-discrete mesh. The bulk element regions of the composite laminate material model 301 are assigned with a free mesh control (e.g., by the free hex-dominated advancing front meshing algorithm 110a), while the fibrous strips are meshed with structured hex elements (e.g., by the structured hex meshing algorithm 110b) to ensure each fibrous strip is modeled with exactly one material along the transverse direction. However, as previously mentioned, the bulk elements and the fibrous strips may be modeled with a free mesh and/or a structured mesh, based on, for example, the complexity of the local geometry. In certain aspects, additional partitions at the point of failure for the composite laminate material model 301 (e.g., the interior hole 304) may be added (e.g., by the free hex-dominated advancing front meshing algorithm 110a and/or the structured hex meshing algorithm 110b) to improve the resulting mesh.

As illustrated in FIG. 3B, the example seeding 306 includes the inner portion 302 of the composite laminate material model 301, the interior hole 304, and the partition portion 308. Generally, the example seeding 306 includes determining and generating the seeding elements, such as seeding element 307 that indicate the connection points of the mesh applied to the inner portion 302. The user may specify a seeding size that corresponds to the seeding element 307 density in the inner portion 302 and/or any other suitable portion of the composite laminate material model 301. For example, regions of the composite laminate material model 301 with expected high stress gradients, such as regions proximate to the interior hole 304, can be seeded with a smaller seeding size to increase the density of seeding elements 307 included within the regions. In this manner, the mesh may be locally refined in a flexible manner that is advantageous relative to conventional techniques.

Following the example seeding 306, FIG. 3C illustrates an example meshing 310 of the inner portion 302 of the composite laminate material model 301. The example meshing 310 includes the partition portion 308, the interior hole 304, and a refined meshing 312. As previously mentioned, the refined meshing 312 may generally include a set of arbitrarily determined geometries that are overlaid onto the inner portion 302 and that align (e.g., terminate) with the seeding elements 307. Further, as part of the example meshing 310, the fiber strength of both the fibrous strips and the bulk elements may be randomized to more accurately reflect a realistic composite laminate material.

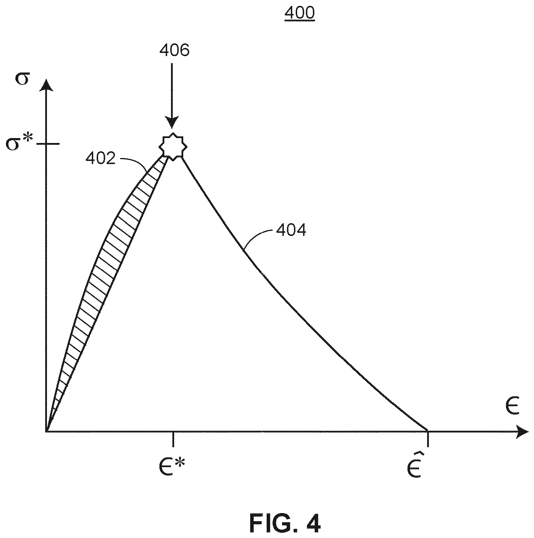

FIG. 4 is an example graph 400 illustrating a general pre-peak and post-peak stress-strain response of a composite laminate material (e.g., composite laminate material model 301), in accordance with various aspects disclosed herein. The constitutive model 110c may generally model the behavior of each composite laminate material generated by the composite laminate modeling application 110 under stress/strain conditions that may appear similar to the example graph 400. The bulk elements (e.g., bulk elements 212a, 212b) and the fibrous strips (e.g., fibrous strips 210a, 210b, 210c) may be modeled with the same constitutive model to minimize the overall complexity particularly because the distinct failure behaviors are due to the material strength distribution.

Additionally, or alternatively, the user may input a relatively large fibrous strip spacing to, for example, generate a relatively large material specimen and/or to reduce overall computational load. With a relatively large fibrous strip spacing, the corresponding bulk elements (e.g., bulk elements 212a, 212b) may be enhanced to capture some degree of a matrix splitting failure mode as well as a fiber failure mode. As a result, the constitutive behavior for these enhanced bulk elements may differ slightly from the constitutive behavior of the corresponding fibrous strip elements based on their characteristic (i.e., element) size. If the enhanced bulk elements are sufficiently small (e.g., comparable to the width of the fibrous strip elements), then the constitutive model may be the same for both elements.

However, if the bulk element size is large, a residual stiffness/modulus may be imposed for the enhanced bulk elements. In these instances, a crack density parameter may be introduced to quantify the damage state, and each enhanced bulk element may capture multiple matrix cracks in a smeared manner by utilizing continuum damage mechanics. Namely, the fibrous strip elements may capture sharp matrix cracks, and the enhanced bulk elements may capture additional damage in a smeared manner that may correspond to the accumulation of multiple matrix cracks occurring within one or more enhanced bulk elements. Hence, this approach may be referenced as a "mixed-fidelity" or "multi-fidelity" damage model.

In any event, generally, the constitutive response of a composite laminate material (e.g., composite laminate material model 301) may include a pre-peak response 402 and a post-peak softening domain, represented by the post-peak response 404. The pre-peak shear behavior is usually non-linear in nature due to micro-cracking (shear hackling) in the matrix. However, these micro-cracks also have an effect on the transverse stiffness of the material. Thus, to capture the material non-linearity while accounting for the adverse effects of micro-cracking on material transverse stiffness, the constitutive model 110c may include Schapery theory (ST) to accurately capture the micro-damage in a composite laminate material. Of course, it is to be understood that any suitable modeling theory may be applied, such as, for example, a multiscale model that captures the stiffness degradation of the composite analytically by the concentric cylinder model (CCM) and the generalized self-consistent method (GSCM).

**In** any event, a failure criterion may trigger the transition (represented by the transition point 406) from the pre-peak response 402 into the post-peak response 404. Physically, when a crack propagates and becomes traction-free, all tractions at the crack tip must vanish simultaneously. However, from a numerical point of view, a mixed-mode law may be critical to minimize oscillations due to sudden stress drops. As a result, the constitutive model 110c may also incorporate a crack band model to account for these physical properties attendant to crack propagation within a composite laminate material.

A processor (e.g., processor 102) generating the constitutive model 110c may calculate the degradation of the transverse and shear moduli based on two damage functions $e_s(S_r)$ and $g_s(S_r)$ in terms of the reduced Schapery parameter:

$$S_r = \sqrt[3]{S} \qquad (1),$$

where S is the energy dissipated due to micro-damage. Accordingly, the two damage functions may be included as part of pristine property equations given by:

$$E_{22} = E_{22}^0\, e_s(S_r) \qquad (2),$$

$$G_{12} = G_{12}^0\, g_s(S_r) \qquad (3),$$

where $E_{22}^0$ and $G_{12}^0$ are pristine properties that the processor may utilize when determining and solving a Schapery theory equation given by:

$$\frac{1}{2}\left(E_{22}^0\, \frac{de_s(S_r)}{dS_r}\, \varepsilon_{22}^2 + G_{12}^0\, \frac{dg_s(S_r)}{dS_r}\, \gamma_{12}^2\right) = -3S_r^2 \qquad (4)$$

Equation (4) is generally a thermodynamics model that ensures the rate of dissipated energy within the composite laminate material is always positive, and the processor may solve equation (4) to obtain the Schapery parameter in equation (1), and the damage function values $E_{22}$ and $G_{12}$ in equations (2) and (3), respectively. In certain aspects, the processor may hold other moduli constant when solving equation (4). In any event, the processor may then apply a two-parameter fit given by:

$$\tau_{12} = \frac{G_{12}^0}{c}\left(1 - e^{-c\gamma_{12}}\right) \qquad (5),$$

to generate portions of the pre-peak response 402 and/or the post-peak response 404.

The processor may generate the post-peak response 404 by utilizing a crack band model. For the post-peak response, the processor may define and/or may receive damage parameters to degrade the extensional and shear moduli, as well as Poisson's ratios. The crack band method employed by the processor utilizes a characteristic length to ensure the correct energy dissipation and mesh objectivity. The processor may calculate the characteristic lengths using the element nodal coordinates and material point coordinates. In certain aspects, based on failure models for composites, the element size may be used as the characteristic length.

The processor may also determine a post-peak softening response for the composite laminate material. More particularly, the processor may parameterize the softening curve for a composite laminate material by a normalized softening function, which can differ for fiber and matrix modes. The normalized softening function may generally be defined by:

$$\sigma = \sigma^* \, \bar{f} \left( \frac{\varepsilon - |\varepsilon^*|}{\hat{\varepsilon} - |\varepsilon^*|} \right) \qquad (6),$$

where $\bar{\varepsilon} = \frac{\varepsilon - |\varepsilon^*|}{\varepsilon^f}$ is the normalized post-peak strain, $\sigma^*$ is the stress component at the failure initiation, $\hat{\varepsilon}$ is the absolute value of the ultimate failure strain, the post-peak failure strain $\varepsilon^f$ is given by:

$$\hat{\varepsilon} = |\varepsilon^*| + \varepsilon^f \qquad (7),$$

and $\bar{f}$ is parameterized with a cubic Bezier curve. Using the parameterization of $\bar{f}$, the processor may generate a variety of shapes related to the softening of a particular composite laminate material. For example, the processor may generate a quasi-bilinear softening law, a linear law, a quasi-trapezoidal law, and/or other shapes or combinations thereof.

Using these equations (e.g., equations (1)-(7)) and others derived therefrom, the processor may fully describe the post-peak response 404 as:

$$d_1 = d_f = 1 - \frac{|\varepsilon_{11}^*|}{\varepsilon_{11}} \, \bar{f}_f \left( \frac{\varepsilon_{11} - |\varepsilon_{11}^*|}{\hat{\varepsilon}_{11} - |\varepsilon_{11}^*|} \right) \qquad (8),$$

where the processor, when applying equation (8), may assume that the fiber damage is only governed by the strain in the fiber direction $\varepsilon_{11}$.

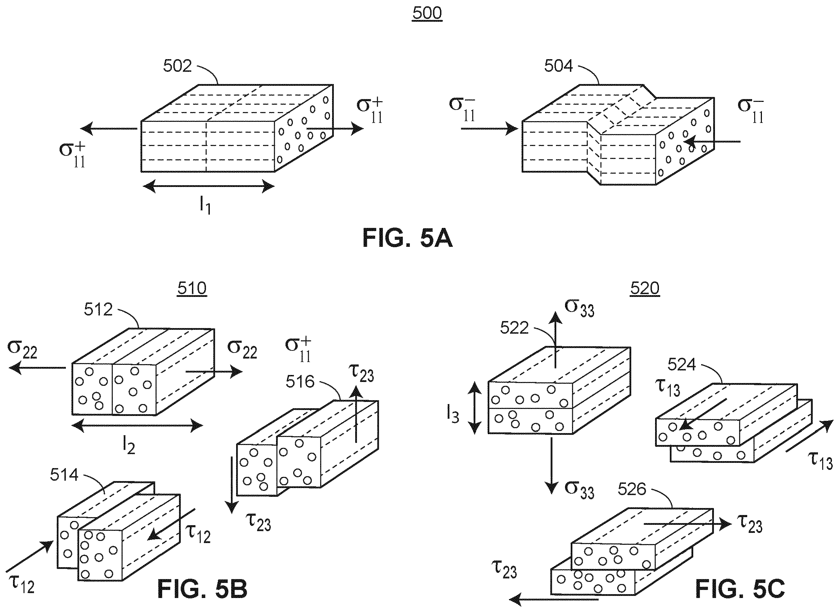

The transition point 406 may represent transition criteria corresponding to the transition between the pre-peak response 402 to the post-peak response 404. For example, the processor may utilize Hashin criteria to govern the transition between the pre-peak response 402 and the post-peak response 404. However, it will be appreciated that any suitable transition criteria may be used. When modeling the transition criteria, the processor may analyze multiple failure planes for the composite laminate material. For example, FIGs. 5A-5C illustrate several example failure planes that the processor may analyze when determining the transition criteria for a particular composite laminate material.

FIG. 5A illustrates a fiber failure plane 500 used to inform the constitutive model 110c for a composite laminate material, and in accordance with various aspects disclosed herein. Generally, the fiber failure plane 500 includes two failure modes in the fiber direction of the composite laminate material. The first fiber failure mode 502 represents a failure mode due to a transverse stress $\sigma_{11}^+$ applied in directions pulling away from the composite laminate material in the fiber direction. The second fiber failure mode 504 represents a failure mode due to kinking of the composite laminate material under a compressive stress $\sigma_{11}^-$ applied in directions pushing into the composite laminate material in the fiber direction.

FIG. 5B illustrates a first matrix failure plane 510 used to inform the constitutive model 110c for a composite laminate material, and in accordance with various aspects disclosed herein. Generally, the first matrix failure plane 510 includes three failure modes that may or may not be in the fiber direction of the composite laminate material, including a transverse stress matrix failure mode 512, an in-plane shear stress matrix failure mode 514, and a first transverse shear stress matrix failure mode 516. The transverse stress matrix failure mode 512 represents a matrix failure mode due to a transverse stress $\sigma_{22}$ applied in directions pulling away from the composite laminate material approximately perpendicular to the fiber direction. The in-plane shear stress matrix failure mode 514 represents a matrix failure mode due to an in-plane shear stress $\tau_{12}$ applied to the composite laminate material in directions approximately linear to the fiber direction. The first transverse shear stress matrix failure mode 516 represents a matrix failure mode due to a transverse shear stress $\tau_{12}$ applied to the composite laminate material in directions approximately perpendicular to the fiber direction.

FIG. 5C illustrates a second matrix failure plane 520 used to inform the constitutive model 110c for a composite laminate material, and in accordance with various aspects disclosed herein. Generally, the second matrix failure plane 520 includes three failure modes that may or may not be in the fiber direction of the composite laminate material, including an out-of-plane stress matrix failure mode 522, an out-of-plane shear stress matrix failure mode 524, and a second transverse shear stress matrix failure mode 526. The out-of-plane stress matrix failure mode 522 represents a matrix failure mode due to an out-of-plane stress $\sigma_{33}$ applied in directions pulling away from the composite laminate material approximately perpendicular to the fiber direction. The out-of-plane shear stress matrix failure mode 524 represents a matrix failure mode due to an out-of-plane shear stress $\tau_{13}$ applied to the composite laminate material in directions approximately linear to the fiber direction. The second transverse shear stress matrix failure mode 526 represents a matrix failure mode due to a transverse shear stress $\tau_{23}$ applied to the composite laminate material in directions approximately perpendicular to the fiber direction.

Of course, it should be understood that any suitable failure criteria may be applied. For example, using Mohr-Coulomb criteria and/or Puck criteria to model the matrix failure, the failure plane may not be limited to 2 matrix failure planes and may include failure planes based on stresses applied in multiple of the directions previously mentioned (e.g., $\sigma_{22}$, $\sigma_{33}$, $\sigma_{12}$, $\sigma_{13}$, $\sigma_{23}$).

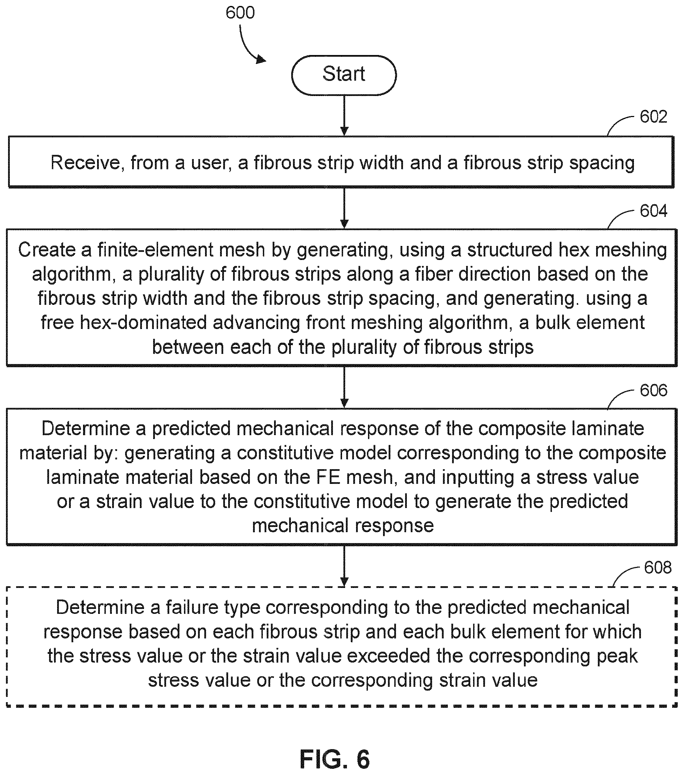

FIG. 6 illustrates an example method 600 for semi-discrete modeling of progressive damage and failure in composite laminate materials, in accordance various aspects disclosed herein. For ease of discussion, many of the various actions included in the method 600 may be described herein as performed by or with the use of a modeling application (e.g., composite laminate modeling application 110). However, it is to be appreciated that the various actions included in the method 600 may be performed by, for example, a local processor (e.g., processor 102) executing the modeling application, an external server, and/or other suitable processors or combinations thereof.

The example method 600 includes receiving, from a user, a fibrous strip width and a fibrous strip spacing (block 602). With these inputs from the user, the composite laminate modeling application 110, as executed on one or more processors (e.g., processor 102), may proceed to create a finite-element (FE) mesh (block 604). Namely, the composite laminate modeling application 110 may generate, using a structured hex meshing algorithm, a plurality of fibrous strips along a fiber direction based on the fibrous strip width and the fibrous strip spacing. The composite laminate modeling application 110 may further generate, using a free hex-dominated advancing front meshing algorithm, a bulk element between each of the plurality of fibrous strips. Consequently, the FE mesh may define a portion of a composite laminate material.

In certain aspects, the composite laminate modeling application 110 may partition the portion of the composite laminate material as distinct from a different portion of the composite laminate material. The partitioning may indicate, for example, that the application 110 may proceed to seed and mesh only the portion of the composite laminate material that is included within a partition boundary defining the partition. Moreover, in these aspects, the composite laminate modeling application 110 may seed the portion of the composite laminate material with a global mesh size.

In some aspects, the portion of the composite laminate material includes a first portion of the composite laminate material and a second portion of the composite laminate material that is different from the first portion. For example, the first portion of the composite laminate material may include a partitioned portion of the composite laminate material that may be seeded and meshed, as described herein, and the second portion may not be seeded and/or meshed. Additionally, or alternatively, the first portion may include only the fibrous strips of the composite laminate material, and the second portion may include only the bulk elements of the composite laminate material.

In certain aspects, the plurality of fibrous strips may be comprised of a corresponding plurality of materials configured to achieve a non-uniform strength distribution of the composite laminate material. For example, and as previously described, the composite laminate modeling application 110 may generate a randomized material distribution for the fibrous strips, such that each fibrous strip may include a different material than some/all adjacent and/or every other fibrous strip included as part of the composite laminate material. Each of the materials assigned by the application 110 may include different strength values, and as a result, the strength distribution of the composite laminate material may be generally non-uniform.

In some aspects, the plurality of fibrous strips may have a first failure mode, and the bulk elements may have a second failure mode that is different from the first failure mode. For example, the first failure mode may be a matrix splitting failure mode and a fiber failure mode, and the second failure mode may be the fiber failure mode. Thus, the first failure mode may be different from the second failure mode because the first failure mode includes the matrix splitting failure mode, but the second failure mode does not.

The method 600 may include determining, a predicted mechanical response of the composite laminate material (block 606). The composite laminate modeling application 110 may determine the predicted mechanical response by generating a constitutive model corresponding to the composite laminate material based on the FE mesh, and inputting a stress value or a strain value to the constitutive model to generate the predicted mechanical response. More specifically, the solver (e.g., solver module 124a) may provide strain values for each integration point of every element at every iteration to the constitutive model. The Laminae subroutine 124c (e.g., by the constitutive model 110c) may receive the strain values and return the strain values and corresponding calculated stress values to the solver, which may output the predicted mechanical response (e.g., results 124f).

In certain aspects, a thermal analysis may be performed before determining the predicted mechanical response in order to capture the manufacturing effects. However, it should be appreciated that the method 600 may be applied for any loading types (e.g., thermal or mechanical), where damage, cracking, and failure may occur.

In certain aspects, each fibrous strip of the plurality of fibrous strips and each bulk element has a corresponding peak stress value and a corresponding peak strain value. Using theses peak stress and strain values, the composite laminate modeling application 110 may determine a failure type corresponding to the predicted mechanical response based on each fibrous strip and each bulk element for which the stress value or the strain value exceeded the corresponding peak stress value or the corresponding strain value. For example, the application 110 may determine that the composite laminate material failed in accordance with a failure type defined by the various failure planes (e.g., 500, 510, 520).

In some aspects, the constitutive model may include a pre-peak response model, a set of transition criteria, and a post-peak response model. Further, the pre-peak response model may be based on a Schapery theory model, and the post-peak response model may be based on a crack band model.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Additionally, certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connects the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of the example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but also deployed across a number of machines. In some example embodiments, the processor or processors may be located in a single location (e.g., within a home environment, an office environment or as a server farm), while in other embodiments the processors may be distributed across a number of locations.

The performance of certain of the operations may be distributed among the one or more processors, not only residing within a single machine, but also deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the description. This description, and the claims that follow, should be read to include one or at least one and the singular also includes the plural unless it is obvious that it is meant otherwise.

While the present invention has been described with reference to specific examples, which are intended to be illustrative only and not to be limiting of the invention, it will be apparent to those of ordinary skill in the art that changes, additions and/or deletions may be made to the disclosed embodiments without departing from the invention as defined by the appended claims.

**Claims**

1. A method for manufacturing and/or repairing a part comprising a composite laminate material, the method involving a computer implemented method for semi-discrete modeling of progressive damage and failure in composite laminate materials, the method comprising:

   receiving (602), from a user, a fibrous strip width and a fibrous strip spacing;
   creating (604), by one or more processors (102), a finite-element (FE) mesh by:

   generating, using a structured hex meshing algorithm (110b), a plurality of fibrous strips (200a; 202a; 204a; 210a, 210b, 210c) along a fiber direction based on the fibrous strip width and the fibrous strip spacing, and generating, using a free hex-dominated advancing front meshing algorithm (110a), a bulk element (200b; 202b; 204b; 212a, 212b) between each of the plurality of fibrous strips (200a; 202a; 204a; 210a, 210b, 210c), wherein at least one bulk element is an enhanced bulk element,

wherein the FE mesh defines a portion of the composite laminate material;

determining (606), by the one or more processors (102), a predicted mechanical response of the composite laminate material by:

generating a constitutive model (110c) corresponding to the composite laminate material based on the FE mesh, wherein the constitutive model includes a crack density parameter to quantify a damage state within the composite laminate material that is associated with the enhanced bulk element capturing at least one matrix crack in a smeared manner, and inputting a stress value or a strain value to the constitutive model to generate the predicted mechanical response;

determining optimal material characteristics for a particular use-case under the simulated stresses and strains; and

running manufacturing equipment to manufacture the part, wherein at least one fibrous strip is applied in the composite laminate material in response to the predicted mechanical response to manufacture the composite laminate material with those material characteristics to produce an optimally configured composite laminate material for the particular use-case.

2. The method of claim 1, wherein creating (604) the FE mesh further comprises:

partitioning the portion of the composite laminate material as distinct from a different portion of the composite laminate material, and

seeding the portion of the composite laminate material with a global mesh size.

3. The method of claim 2, wherein the portion of the composite laminate material includes a first portion of the composite laminate material and a second portion of the composite laminate material that is different from the first portion.

4. The method of any of claims 1 to 3, wherein each fibrous strip of the plurality of fibrous strips (200a; 202a; 204a; 210a, 210b, 210c) and each bulk element (200b; 202b; 204b; 212a, 212b) has a corresponding peak stress value and a corresponding peak strain value, and wherein the method further comprises:

determining (608), by the one or more processors (102), a failure type corresponding to the predicted mechanical response based on each fibrous strip and each bulk element for which the stress value or the strain value exceeded the corresponding peak stress value or the corresponding strain value.

5. The method of any of claims 1 to 4, wherein the plurality of fibrous strips (200a; 202a; 204a; 210a, 210b, 210c) is comprised of a corresponding plurality of materials configured to achieve a non-uniform strength distribution of the composite laminate material.

6. The method of any of claims 1 to 5, wherein the plurality of fibrous strips (200a; 202a; 204a; 210a, 210b, 210c) have a first failure mode and the bulk element (200b; 202b; 204b; 212a, 212b) has a second failure mode that is different from the first failure mode.

7. The method of claim 6, wherein the first failure mode is a matrix splitting failure mode and a fiber failure mode, and the second failure mode is the fiber failure mode.

8. The method of any of claims 1 to 7, wherein the constitutive model (110c) includes a pre-peak response model, a set of transition criteria, and a post-peak response model.

9. The method of claim 8, wherein the pre-peak response model is a Schapery theory model and the post-peak response model is a crack band model.

10. A system for manufacturing and/or repairing a part comprising a composite laminate material, the system comprising a subsystem for semi-discrete modeling of progressive damage and failure in composite laminate materials, the system comprising:

a user interface (104);

a memory (110) storing a set of computer-readable instructions comprising at least a structured hex mesh algorithm (110b) and a free hex-dominated advancing front meshing algorithm (110a); and

a processor (102) interfacing with the user interface (104) and the memory (110), and configured to execute the set of computer-readable instructions to cause the processor (102) to:

receive (602), by the user interface (104), a fibrous strip width and a fibrous strip spacing,
create (604) a finite-element (FE) mesh by:

generating, using the structured hex meshing algorithm (110b), a plurality of fibrous strips (200a; 202a; 204a; 210a, 210b, 210c) along a fiber direction based on the fibrous strip width and the fibrous strip spacing, and
generating, using the free hex-dominated advancing front meshing algorithm (110a), a bulk element (200b; 202b; 204b; 212a, 212b) between each of the plurality of fibrous strips (200a; 202a; 204a; 210a, 210b, 210c), wherein at least one bulk element is an enhanced bulk element,

wherein the FE mesh defines a portion of the composite laminate material,
determine (606) a predicted mechanical response of the composite laminate material by:

generating a constitutive model (110c) corresponding to the composite laminate material based on the FE mesh, wherein the constitutive model includes a crack density parameter to quantify a damage state within the composite laminate material that is associated with the enhanced bulk element capturing at least one matrix crack in a smeared manner, and
inputting a stress value or a strain value to the constitutive model to generate the predicted mechanical response;
determining optimal material characteristics for a particular use-case under the simulated stresses and strains, and

manufacturing equipment configured to manufacture the part, wherein at least one fibrous strip is applied in the composite laminate material in response to the predicted mechanical response to manufacture the composite laminate material with those material characteristics to produce an optimally configured composite laminate material for the particular use-case.

11. The system of claim 10, wherein the set of computer-readable instructions further cause the processor to create the FE mesh by:

partitioning the portion of the composite laminate material as distinct from a different portion of the composite laminate material, and
seeding the portion of the composite laminate material with a global mesh size,
wherein the portion of the composite laminate material includes a first portion of the composite laminate material and a second portion of the composite laminate material that is different from the first portion.

12. The system of claim 10, wherein each fibrous strip of the plurality of fibrous strips (200a; 202a; 204a; 210a, 210b, 210c) and each bulk element (200b; 202b; 204b; 212a, 212b) has a corresponding peak stress value and a corresponding peak strain value, and wherein the set of computer-readable instructions further cause the processor (102) to:
determine (608) a failure type corresponding to the predicted mechanical response based on each fibrous strip and each bulk element for which the stress value or the strain value exceeded the corresponding peak stress value or the corresponding strain value.

13. A non-transitory computer-readable storage medium having stored thereon a set of instructions, executable by at least one processor (102), for semi-discrete modeling of progressive damage and failure in composite laminate materials, the instructions comprising:

instructions for receiving (602), from a user, a fibrous strip width and a fibrous strip spacing;
instructions for creating(604) a finite-element (FE) mesh by:

generating, using a structured hex meshing algorithm (110b), a plurality of fibrous strips (200a; 202a; 204a; 210a, 210b, 210c) along a fiber direction based on the fibrous strip width and the fibrous strip spacing, and
generating, using a free hex-dominated advancing front meshing algorithm (110a), a bulk element (200b; 202b; 204b; 212a, 212b) between each of the plurality of fibrous strips (200a; 202a; 204a; 210a, 210b, 210c), wherein at least one bulk element is an enhanced bulk element,

wherein the FE mesh defines a portion of a composite laminate material; and
instructions for determining (606) a predicted mechanical response of the composite laminate material by:

generating a constitutive model (110c) corresponding to the composite laminate material based on the FE mesh, wherein the constitutive model includes a crack density parameter to quantify a damage state within the composite laminate material that is associated with the enhanced bulk element capturing at least one matrix crack in a smeared manner, and

inputting a stress value or a strain value to the constitutive model to generate the predicted mechanical response;

determining optimal material characteristics for a particular use-case under the simulated stresses and strains; and

instructions for causing manufacturing equipment to manufacture a part comprising a respective composite laminate material, wherein at least one fibrous strip in the respective composite laminate material is based on the predicted mechanical response to manufacture the composite laminate material with those material characteristics to produce an optimally configured composite laminate material for the particular use-case.

14. The non-transitory computer-readable storage medium of claim 13, wherein the instructions further comprise creating the FE mesh by:

partitioning the portion of the composite laminate material as distinct from a different portion of the composite laminate material, and

seeding the portion of the composite laminate material with a global mesh size,

wherein the portion of the composite laminate material includes a first portion of the composite laminate material and a second portion of the composite laminate material that is different from the first portion.

15. The non-transitory computer-readable storage medium of claim 13, wherein each fibrous strip of the plurality of fibrous strips (200a; 202a; 204a; 210a, 210b, 210c) and each bulk element (200b; 202b; 204b; 212a, 212b) has a corresponding peak stress value and a corresponding peak strain value, and wherein the instructions further comprise:

instructions for determining (608) a failure type corresponding to the predicted mechanical response based on each fibrous strip and each bulk element for which the stress value or the strain value exceeded the corresponding peak stress value or the corresponding strain value.

**Patentansprüche**

1. Verfahren zum Herstellen und/oder Reparieren eines Teils, das ein Verbundlaminatmaterial umfasst, wobei das Verfahren ein computerimplementiertes Verfahren zur semidiskreten Modellierung einer fortschreitender Beschädigung und eines Versagens in Verbundlaminatmaterialien beinhaltet, wobei das Verfahren umfasst:

Empfangen (602) einer Faserstreifenbreite und eines Faserstreifenabstands von einem Benutzer;

Erstellen (604), durch einen oder mehrere Prozessoren (102), eines Finite-Elemente (FE)-Netzes durch:

Erzeugen, unter Verwendung eines strukturierten Hex-Netzalgorithmus (110b), einer Vielzahl von Faserstreifen (200a; 202a; 204a; 210a, 210b, 210c) entlang einer Faserrichtung auf der Grundlage der Faserstreifenbreite und des Faserstreifenabstands, und

Erzeugen eines Volumenelements (200b; 202b; 204b; 212a, 212b) zwischen jedem der Vielzahl von Faserstreifen (200a; 202a; 204a; 210a, 210b, 210c) unter Verwendung eines freien hex-dominierten Vorwärtsfront-Vernetzungsalgorithmus, wobei mindestens ein Volumenelement ein verbessertes Volumenelement ist,

wobei das FE-Netz einen Teilbereich des Verbundlaminatmaterials definiert;

Bestimmen (606), durch den einen oder die mehreren Prozessoren (102), einer vorhergesagten mechanischen Reaktion des Verbundlaminatmaterials durch:

Erzeugen eines konstitutiven Modells (110c), das dem Verbundlaminatmaterial entspricht, basierend auf dem FE-Netz, wobei das konstitutive Modell einen Rissdichteparameter beinhaltet, um einen Schadenszustand innerhalb des Verbundlaminatmaterials zu quantifizieren, der mit dem verbesserten Volumenelement verbunden ist, wobei mindestens ein Matrixriss in einer verschmierten Weise erfasst wird,, und Eingeben eines Spannungswerts oder eines Dehnungswerts in das konstitutive Modell, um die vorhergesagte mechanische Reaktion zu erzeugen;

Bestimmen der optimalen Materialeigenschaften für einen bestimmten Anwendungsfall unter den simulierten Spannungen und Dehnungen; und

Betreiben einer Fertigungsanlage zur Herstellung des Teils, wobei als Reaktion auf die vorhergesagte mechanische Reaktion mindestens ein Faserstreifen in das Verbundlaminatmaterial eingebracht wird, um das Verbundlaminatmaterial mit diesen Materialeigenschaften herzustellen, um ein optimal konfiguriertes Verbundlaminatmaterial für den bestimmten Anwendungsfall zu erzeugen.

2. Verfahren nach Anspruch 1, wobei das Erstellen (604) des FE-Netzes ferner umfasst:

Abteilen des Teilbereichs des Verbundlaminatmaterials, so dass dieser von einem anderen Teilbereich des Verbundlaminatmaterials verschieden ist, und

Besäen des Teilbereichs des Verbundlaminatmaterials mit einer globalen Maschenweite.

3. Verfahren nach Anspruch 2, wobei der Teilbereich des Verbundlaminatmaterials einen ersten Teilbereich des Verbundlaminatmaterials und einen zweiten Teilbereich des Verbundlaminatmaterials umfasst, der sich von dem ersten Teilbereich unterscheidet.

4. Verfahren nach einem der Ansprüche 1 bis 3, wobei jeder Faserstreifen der Vielzahl von Faserstreifen (200a; 202a; 204a; 210a, 210b, 210c) und jedes Volumenelement (200b; 202b; 204b; 212a, 212b) einen entsprechenden Spitzenwert der Spannung und einen entsprechenden Spitzenwert der Dehnung aufweist, und wobei das Verfahren ferner umfasst:

Bestimmen (608), durch den einen oder die mehreren Prozessoren (102), eines Ausfalltyps, der der vorhergesagten mechanischen Reaktion entspricht, basierend auf jedem Faserstreifen und jedem Volumenelement, für das der Spannungswert oder der Dehnungswert den entsprechenden Spitzenwert der Spannung oder den entsprechenden Spitzenwert der Dehnung überschritten hat.

5. Verfahren nach einem der Ansprüche 1 bis 4, wobei die Vielzahl von Faserstreifen (200a; 202a; 204a; 210a, 210b, 210c) aus einer entsprechenden Vielzahl von Materialien besteht, die so konfiguriert sind, dass sie eine ungleichmäßige Festigkeitsverteilung des Verbundlaminatmaterials erzielen.

6. Verfahren nach einem der Ansprüche 1 bis 5, wobei die Vielzahl von Faserstreifen (200a; 202a; 204a; 210a, 210b, 210c) einen ersten Ausfallmodus aufweisen und das Volumenelement (200b; 202b; 204b; 212a, 212b) einen zweiten Ausfallmodus aufweist, der sich vom ersten Ausfallmodus unterscheidet.

7. Verfahren nach Anspruch 6, wobei der erste Ausfallmodus ein Matrixspaltungsausfallmodus und ein Faserausfallmodus ist, und der zweite Ausfallmodus der Faserausfallmodus ist.

8. Verfahren nach einem der Ansprüche 1 bis 7, wobei das konstitutive Modell (110c) ein Vor-Spitzen-Reaktionsmodell, einen Satz von Übergangskriterien und ein Nach-Spitzen-Reaktionsmodell umfasst.

9. Verfahren nach Anspruch 8, wobei das Vor-Spitzen-Reaktionsmodell ein Schapery-Theorie-Modell ist und das Nach-Spitzen-Reaktionsmodell ein Rissbandmodell ist.

10. System zum Herstellen und/oder Reparieren eines Teils, das ein Verbundlaminatmaterial umfasst, wobei das System ein Subsystem zur semidiskreten Modellierung einer fortschreitenden Beschädigung und eines Versagens in Verbundlaminatmaterialien umfasst, wobei das System umfasst:

eine Benutzerschnittstelle (104);

einen Speicher (110), der einen Satz computerlesbarer Anweisungen speichert, der mindestens einen strukturierten Hex-Netzalgorithmus (110b) und einen freien, hex-dominierten Vorwärtsfront-Vernetzungsalgorithmus (110a) umfasst; und

einen Prozessor (102), der mit der Benutzerschnittstelle (104) und dem Speicher (110) verbunden ist und so konfiguriert ist, dass er den Satz computerlesbarer Anweisungen ausführt, um den Prozessor (102) zu folgenden Schritten zu veranlassen,

Empfangen (602), über die Benutzerschnittstelle (104), einer Faserstreifenbreite und eines Faserstreifenabstands,

Erstellen (604) eines Finite-Elemente (FE)-Netzes durch:

Erzeugen, unter Verwendung des strukturierten Hex-Netzalgorithmus (110b), einer Vielzahl von Faserstreifen (200a; 202a; 204a; 210a, 210b, 210c) entlang einer Faserrichtung auf der Grundlage der Faserstreifenbreite und des Faserstreifenabstands, und

Erzeugen eines Volumenelements (200b; 202b; 204b; 212a, 212b) unter Verwendung eines freien hex-dominierten Vorwärtsfront-Vernetzungsalgorithmus zwischen jedem der Vielzahl von Faserstreifen (200a; 202a; 204a; 210a, 210b, 210c), wobei mindestens ein Volumenelement ein verbessertes Volumenelement ist,

wobei das FE-Netz einen Teilbereich des Verbundlaminatmaterials definiert,

Bestimmen (606) einer vorhergesagten mechanischen Reaktion des Verbundlaminatmaterials durch:

Erzeugen eines konstitutiven Modells (110c), das dem Verbundlaminatmaterial entspricht, basierend auf dem FE-Netz, wobei das konstitutive Modell einen Rissdichteparameter beinhaltet, um einen Schadenzustand innerhalb des Verbundlaminatmaterials zu quantifizieren, der mit dem verbesserten Volumenelement verbunden ist, wobei mindestens ein Matrixriss in einer verschmierten Weise erfasst wird, und

Eingeben eines Spannungswerts oder eines Dehnungswerts in das konstitutive Modell, um die vorhergesagte mechanische Reaktion zu erzeugen;

Bestimmen von optimalen Materialeigenschaften für einen bestimmten Anwendungsfall unter den simulierten Spannungen und Dehnungen, und

eine Fertigungsanlage, die zum Herstellen des Teils konfiguriert ist, wobei in Reaktion auf die vorhergesagte mechanische Reaktion mindestens ein Faserstreifen in das Verbundlaminatmaterial eingebracht wird, um das Verbundlaminatmaterial mit diesen Materialeigenschaften herzustellen, um ein optimal konfiguriertes Verbundlaminatmaterial für den bestimmten Anwendungsfall zu erzeugen.

11. System nach Anspruch 10, wobei der Satz computerlesbarer Anweisungen den Prozessor ferner veranlasst, das FE-Netz zu erstellen, indem

Abteilen des Teilbereichs des Verbundlaminatmaterials, so dass dieser von einem anderen Teilbereich des Verbundlaminatmaterials verschieden ist, und

Besäen des Teilbereichs des Verbundlaminatmaterials mit einer globalen Maschenweite,

wobei der Teilbereich des Verbundlaminatmaterials einen ersten Teilbereich des Verbundlaminatmaterials und einen zweiten Teilbereich des Verbundlaminatmaterials umfasst, der sich von dem ersten Teilbereich unterscheidet.

12. System nach Anspruch 10, wobei jeder Faserstreifen der Vielzahl von Faserstreifen (200a; 202a; 204a; 210a, 210b, 210c) und jedes Volumenelement (200b; 202b; 204b; 212a, 212b) einen entsprechenden Spitzenwert der Spannung und einen entsprechenden Spitzenwert der Dehnung aufweist, und wobei der Satz computerlesbarer Anweisungen den Prozessor (102) ferner veranlasst:

einen Ausfalltyp zu bestimmen (608), der der vorhergesagten mechanischen Reaktion entspricht, basierend auf jedem Faserstreifen und jedem Volumenelement, für das der Spannungswert oder der Dehnungswert den entsprechenden Spitzenwert der Spannung oder den entsprechenden Spitzenwert der Dehnung überschritten hat.

13. Nichtflüchtiges, computerlesbares Speichermedium, auf dem ein Satz von Anweisungen gespeichert ist, die von mindestens einem Prozessor (102) ausgeführt werden können, zur semidiskreten Modellierung einer fortschreitender Beschädigung und eines Versagens in Verbundlaminatmaterialien, wobei die Anweisungen Folgendes umfassen:

Anweisungen zum Empfangen (602) einer Faserstreifenbreite und eines Faserstreifenabstands von einem Benutzer;

Anweisungen zum Erstellen (604) eines Finite-Elemente (FE)-Netzes durch:

Erzeugen, unter Verwendung eines strukturierten Hex-Netzalgorithmus (110b), einer Vielzahl von Faserstreifen (200a; 202a; 204a; 210a, 210b, 210c) entlang einer Faserrichtung auf der Grundlage der Faserstreifenbreite und des Faserstreifenabstands, und

Erzeugen eines Volumenelements (200b; 202b; 204b; 212a, 212b) unter Verwendung eines freien hex-dominierten Vorwärtsfront-Vernetzungsalgorithmus zwischen jedem der Vielzahl von Faserstreifen (200a;

202a; 204a; 210a, 210b, 210c), wobei mindestens ein Volumenelement ein verbessertes Volumenelement ist, wobei das FE-Netz einen Teilbereich eines Verbundlaminatmaterials definiert; und

Anweisungen zum Bestimmen (606) einer vorhergesagten mechanischen Reaktion des Verbundlaminatmaterials durch:

Erzeugen eines konstitutiven Modells (110c), das dem Verbundlaminatmaterial entspricht, basierend auf dem FE-Netz, wobei das konstitutive Modell einen Rissdichteparameter beinhaltet, um einen Schadenzustand innerhalb des Verbundlaminatmaterials zu quantifizieren, der mit dem verbesserten Volumenelement verbunden ist, wobei mindestens ein Matrixriss in einer verschmierten Weise erfasst wird, und
Eingeben eines Spannungswerts oder eines Dehnungswerts in das konstitutive Modell, um die vorhergesagte mechanische Reaktion zu erzeugen;
Bestimmen von optimalen Materialeigenschaften für einen bestimmten Anwendungsfall unter den simulierten Spannungen und Dehnungen; und

Anweisungen, um eine Fertigungsanlage zur Herstellung eines Teils zu veranlassen, das ein entsprechendes Verbundlaminatmaterial umfasst, wobei mindestens ein Faserstreifen in dem entsprechenden Verbundlaminatmaterial auf der vorhergesagten mechanischen Reaktion basiert, um das Verbundlaminatmaterial mit diesen Materialeigenschaften herzustellen, um ein optimal konfiguriertes Verbundlaminatmaterial für den bestimmten Anwendungsfall zu erzeugen.

14. Nichtflüchtiges, computerlesbare Speichermedium nach Anspruch 13, wobei die Anweisungen ferner das Erstellen des FE-Netzes umfassen durch:

Abteilen des Teilbereichs des Verbundlaminatmaterials, so dass dieser von einem anderen Teilbereich des Verbundlaminatmaterials verschieden ist, und
Besäen des Teilbereichs des Verbundlaminatmaterials mit einer globalen Maschenweite,
wobei der Teilbereich des Verbundlaminatmaterials einen ersten Teilbereich des Verbundlaminatmaterials und einen zweiten Teilbereich des Verbundlaminatmaterials umfasst, der sich von dem ersten Teilbereich unterscheidet.

15. Nichtflüchtiges computerlesbares Speichermedium nach Anspruch 13, wobei jeder Faserstreifen der Vielzahl von Faserstreifen (200a; 202a; 204a; 210a, 210b, 210c) und jedes Volumenelement (200b; 202b; 204b; 212a, 212b) einen entsprechenden Spitzenwert für die Spannung und einen entsprechenden Spitzenwert für die Dehnung aufweist, und wobei die Anweisungen ferner umfassen:
Anweisungen zum Bestimmen (608) eines Ausfalltyps, der der vorhergesagten mechanischen Reaktion entspricht, basierend auf jedem Faserstreifen und jedem Volumenelement, für das der Spannungswert oder der Dehnungswert den entsprechenden Spitzenwert der Spannung oder den entsprechenden Spitzenwert der Dehnung überschritten hat.

## Revendications

1. Procédé de fabrication et/ou de réparation d'une pièce comprenant un matériau stratifié composite, le procédé impliquant un procédé mis en œuvre par ordinateur pour une modélisation semi-discrète d'endommagement et de défaillance progressifs de matériaux stratifiés composites, le procédé comprenant :

la réception (602), en provenance d'un utilisateur, d'une largeur de bande fibreuse et d'un espacement de bande fibreuse ;
la création (604), par un ou plusieurs processeurs (102), d'un maillage d'éléments finis (FE) par :

génération, à l'aide d'un algorithme de maillage hexagonal structuré (110b), d'une pluralité de bandes fibreuses (200a ; 202a ; 204a ; 210a, 210b, 210c) le long d'une direction de fibre sur la base de la largeur de bande fibreuse et de l'espacement de bande fibreuse, et
génération, à l'aide d'un algorithme de maillage à front progressif à dominante hexagonale libre (110a), d'un élément en vrac (200b ; 202b ; 204b ; 212a, 212b) entre chacune de la pluralité de bandes fibreuses (200a ; 202a ; 204a ; 210a, 210b, 210c), dans lequel au moins un élément en vrac est un élément en vrac amélioré, dans lequel le maillage FE définit une partie du matériau stratifié composite ;

la détermination (606), par le ou les processeurs (102), d'une réponse mécanique prévue du matériau stratifié composite par :

génération d'un modèle constitutif (110c) correspondant au matériau stratifié composite sur la base du maillage FE, dans lequel le modèle constitutif comporte un paramètre de densité de fissure afin de quantifier un état d'endommagement dans le matériau stratifié composite qui est associé à l'élément en vrac amélioré capturant au moins une fissure matricielle de manière étalée, et introduction d'une valeur de contrainte ou d'une valeur de déformation dans le modèle constitutif afin de générer la réponse mécanique prédite ;
détermination de caractéristiques optimales de matériaux pour un cas d'utilisation particulier dans le cadre de contraintes et déformations simulées ; et
fonctionnement de l'équipement de fabrication afin de fabriquer la pièce, dans lequel au moins une bande fibreuse est appliquée dans le matériau stratifié composite en réponse à la réponse mécanique prévue afin de fabriquer le matériau stratifié composite avec ces caractéristiques de matériau pour produire un matériau stratifié composite conçu de manière optimale pour le cas d'utilisation particulier.

2. Procédé selon la revendication 1, dans lequel la création (604) du maillage FE comprend en outre :

la séparation de la partie du matériau stratifié composite en la distinguant d'une partie différente du matériau stratifié composite, et
l'ensemencement de la partie du matériau stratifié composite avec une dimension de maille globale.

3. Procédé selon la revendication 2, dans lequel la partie du matériau stratifié composite comporte une première partie du matériau stratifié composite et une seconde partie du matériau stratifié composite qui est différente de la première partie.

4. Procédé selon l'une quelconque des revendications 1 à 3, dans lequel chaque bande fibreuse de la pluralité de bandes fibreuses (200a ; 202a ; 204a ; 210a, 210b, 210c) et chaque élément en vrac (200b ; 202b ; 204b ; 212a, 212b) a une valeur de contrainte maximale correspondante et une valeur de déformation maximale correspondante, et dans lequel le procédé comprend en outre :
la détermination (608), par le ou les processeurs (102), d'un type de défaillance correspondant à la réponse mécanique prévue sur la base de chaque bande fibreuse et de chaque élément en vrac pour lesquels la valeur de contrainte ou la valeur de déformation a dépassé la valeur de contrainte maximale correspondante ou la valeur de déformation correspondante.

5. Procédé selon l'une quelconque des revendications 1 à 4, dans lequel la pluralité de bandes fibreuses (200a ; 202a ; 204a ; 210a, 210b, 210c) est constitué d'une pluralité correspondante de matériaux conçus pour obtenir une répartition non uniforme de résistance du matériau stratifié composite.

6. Procédé selon l'une quelconque des revendications 1 à 5, dans lequel la pluralité de bandes fibreuses (200a ; 202a ; 204a 210a, 210b, 210c) a un premier mode de défaillance et l'élément en vrac (200b ; 202b ; 204b ; 212a, 212b) a un second mode de défaillance qui est différent du premier mode de défaillance.

7. Procédé selon la revendication 6, dans lequel le premier mode de défaillance est un mode de rupture matricielle et un mode de rupture de fibre, et le second mode de défaillance est le mode de rupture de fibre.

8. Procédé selon l'une quelconque des revendications 1 à 7, dans lequel le modèle constitutif (110c) comporte un modèle de réponse avant-pic, un ensemble de critères de transition, et un modèle de réponse après-pic.

9. Procédé selon la revendication 8, dans lequel le modèle de réponse avant-pic est un modèle de la théorie de Schapery et le modèle de réponse après-pic est un modèle de bande de fissure.

10. Système de fabrication et/ou de réparation d'une pièce comprenant un matériau stratifié composite, le système comprenant un sous-système pour une modélisation semi-discrète d'endommagement et de défaillance progressifs de matériaux stratifiés composites, le système comprenant :

une interface utilisateur (104) ;
une mémoire (110) stockant un ensemble d'instructions lisibles par ordinateur comprenant au moins un algorithme de maillage hexagonal structuré (110b) et un algorithme de maillage à front d'avancement hexagonal libre (110a) ; et

un processeur (102) en interface avec l'interface utilisateur (104) et la mémoire (110), et configuré pour exécuter l'ensemble d'instructions lisibles par ordinateur pour amener le processeur (102) à :

recevoir (602), par l'interface utilisateur (104), une largeur de bande fibreuse et un espacement de bande fibreuse,

créer (604) un maillage d'éléments finis (FE) par :

génération, à l'aide de l'algorithme de maillage hexagonal structuré (110b), d'une pluralité de bandes fibreuses (200a ; 202a ; 204a ; 210a, 210b, 210c) le long d'une direction de fibre sur la base de la largeur de bande fibreuse et de l'espacement de bande fibreuse, et

génération, à l'aide d'un algorithme de maillage à front progressif à dominante hexagonale libre (110a), d'un élément en vrac (200b ; 202b ; 204b ; 212a, 212b) entre chacune des bandes fibreuses (200a ; 202a ; 204a ; 210a, 210b, 210c), dans lequel au moins un élément en vrac est un élément en vrac amélioré,

dans lequel le maillage FE définit une partie du matériau stratifié composite,

déterminer (606) une réponse mécanique prévue du matériau stratifié composite par :

génération d'un modèle constitutif (110c) correspondant au matériau stratifié composite sur la base du maillage FE, dans lequel le modèle constitutif comprend un paramètre de densité de fissure afin de quantifier un état d'endommagement dans le matériau stratifié composite qui est associé à l'élément en vrac amélioré capturant au moins une fissure matricielle de manière étalée, et

introduction d'une valeur de contrainte ou d'une valeur de déformation dans le modèle constitutif afin de générer la réponse mécanique prévue ;

détermination de caractéristiques optimales de matériaux pour un cas d'utilisation particulier dans le cadre de contraintes et déformations simulées, et

un équipement de fabrication configuré pour fabriquer la pièce, dans lequel au moins une bande fibreuse est appliquée dans le matériau stratifié composite en réponse à la réponse mécanique prévue afin de fabriquer le matériau stratifié composite avec ces caractéristiques de matériau pour produire un matériau stratifié composite conçu de manière optimale pour le cas d'utilisation particulier.

11. Système selon la revendication 10, dans lequel l'ensemble d'instructions lisibles par ordinateur amène en outre le processeur à créer le maillage FE par :

séparation de la partie du matériau stratifié composite en la distinguant d'une partie différente du matériau stratifié composite, et

ensemencement de la partie du matériau stratifié composite avec une dimension de maille globale,

dans lequel la partie du matériau stratifié composite comporte une première partie du matériau stratifié composite et une seconde partie du matériau stratifié composite qui est différente de la première partie.

12. Système selon la revendication 10, dans lequel chaque bande fibreuse de la pluralité de bandes fibreuses (200a ; 202a ; 204a ; 210a, 210b, 210c) et chaque élément en vrac (200b ; 202b ; 204b ; 212a, 212b) a une valeur de contrainte maximale correspondante et une valeur de déformation maximale correspondante, et dans lequel l'ensemble d'instructions lisibles par ordinateur amène en outre le processeur (102) à :

déterminer (608) un type de défaillance correspondant à la réponse mécanique prévue sur la base de chaque bande fibreuse et de chaque élément en vrac pour lesquels la valeur de contrainte ou la valeur de déformation a dépassé la valeur de contrainte maximale correspondante ou la valeur de déformation correspondante.

13. Support de stockage non transitoire lisible par ordinateur sur lequel est stocké un ensemble d'instructions, exécutables par au moins un processeur (102), pour une modélisation semi-discrète d'endommagement et de défaillance progressifs de matériaux stratifiés composites, les instructions comprenant :

des instructions permettant de recevoir (602), en provenance d'un utilisateur, une largeur de bande fibreuse et un espacement de bande fibreuse ;

des instructions permettant de créer (604) un maillage d'éléments finis (FE) par :

génération, à l'aide d'un algorithme de maillage hexagonal structuré (110b), d'une pluralité de bandes fibreuses (200a ; 202a ; 204a ; 210a, 210b, 210c) le long d'une direction de fibre sur la base de la largeur de bande fibreuse et de l'espacement de bande fibreuse, et

génération, à l'aide d'un algorithme de maillage à front progressif à dominante hexagonale libre (110a), d'un élément en vrac (200b ; 202b ; 204b ; 212a, 212b) entre chacune des bandes fibreuses (200a ; 202a ; 204a ; 210a, 210b, 210c), dans lequel au moins un élément en vrac est un élément en vrac amélioré, dans lequel le maillage FE définit une partie d'un matériau stratifié composite ; et

des instructions permettant de déterminer (606) une réponse mécanique prévue du matériau stratifié composite par :

génération d'un modèle constitutif (110c) correspondant au matériau stratifié composite sur la base du maillage FE, dans lequel le modèle constitutif comprend un paramètre de densité de fissure afin de quantifier un état d'endommagement dans le matériau stratifié composite qui est associé à l'élément en vrac amélioré capturant au moins une fissure matricielle de manière étalée, et

introduction d'une valeur de contrainte ou d'une valeur de déformation dans le modèle constitutif afin de générer la réponse mécanique prévue ;

détermination de caractéristiques optimales de matériaux pour un cas d'utilisation particulier dans le cadre de contraintes et déformations simulées ; et

des instructions permettant d'amener l'équipement de fabrication à fabriquer une pièce comprenant un matériau stratifié composite respectif, dans lequel au moins une bande fibreuse dans le matériau stratifié composite respectif est basée sur la réponse mécanique prévue pour fabriquer le matériau stratifié composite avec ces caractéristiques de matériau afin de produire un matériau stratifié composite conçu de manière optimale pour le cas d'utilisation particulier.

**14.** Support de stockage non transitoire lisible par ordinateur selon la revendication 13, dans lequel les instructions comprennent en outre la création du maillage FE par :

séparation de la partie du matériau stratifié composite en la distinguant d'une partie différente du matériau stratifié composite, et

ensemencement de la partie du matériau stratifié composite avec une dimension de maille globale, dans lequel la partie du matériau stratifié composite comporte une première partie du matériau stratifié composite et une seconde partie du matériau stratifié composite qui est différente de la première partie.

**15.** Support de stockage non transitoire lisible par ordinateur selon la revendication 13, dans lequel chaque bande fibreuse de la pluralité de bandes fibreuses (200a ; 202a ; 204a ; 210a, 210b, 210c) et chaque élément en vrac (200b ; 202b ; 204b ; 212a, 212b) a une valeur de contrainte maximale correspondante et une valeur de déformation maximale correspondante, et dans lequel les instructions comprennent en outre :

des instructions permettant de déterminer (608) un type de défaillance correspondant à la réponse mécanique prévue sur la base de chaque bande fibreuse et de chaque élément en vrac pour lesquels la valeur de contrainte ou la valeur de déformation a dépassé la valeur de contrainte maximale correspondante ou la valeur de déformation correspondante.

**FIG. 1A**

EP 4 181 007 B1

120

122

122a
GEOMETRIC INPUTS

122b
MATERIAL PROPERTY INPUTS

110d
MESH GENERATION TOOL

122c
FLEXIBLE MESHING MODEL

122d
INPUT FILE

122e
INPUT FILE SPLIT TOOL

122f
MAIN INPUT FILE

122g
ENDING INPUT FILE

122h
MATERIAL PROPERTY DISTRIBUTION TOOL

122i
ENDING X INPUT FILE

124

124b
CHARACTERISTIC LENGTH SUBROUTINE

124c
LAMINAE SUBROUTINE

110c
CONSTITUTIVE MODEL

124d
INTER-LAMINAR SUBROUTINE

124e
INTER-LAMINAR CONSTITUTIVE MODEL

124a
SOLVER MODULE

124f
RESULTS

126

126a
POST PROCESSING RESULTS

**FIG. 1B**

**FIG. 2A**

**FIG. 2B**

**FIG. 2C**

**FIG. 2D**

FIBROUS STRIP WIDTH

FIBROUS STRIP SPACING

206

110

110a FREE HEX-DOMINATED ADVANCING FRONT MESHING ALGORITHM

110b STRUCTURED HEX MESHING ALGORITHM

110d MESH GENERATION TOOL

EP 4 181 007 B1

FIG. 3A

FIG. 3B

FIG. 3C

EP 4 181 007 B1

FIG. 4

**FIG. 5A**

**FIG. 5B**

**FIG. 5C**

EP 4 181 007 B1

600

Start

602

Receive, from a user, a fibrous strip width and a fibrous strip spacing

604

Create a finite-element mesh by generating, using a structured hex meshing algorithm, a plurality of fibrous strips along a fiber direction based on the fibrous strip width and the fibrous strip spacing, and generating. using a free hex-dominated advancing front meshing algorithm, a bulk element between each of the plurality of fibrous strips

606

Determine a predicted mechanical response of the composite laminate material by: generating a constitutive model corresponding to the composite laminate material based on the FE mesh, and inputting a stress value or a strain value to the constitutive model to generate the predicted mechanical response

608

Determine a failure type corresponding to the predicted mechanical response based on each fibrous strip and each bulk element for which the stress value or the strain value exceeded the corresponding peak stress value or the corresponding strain value

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MINH HOANG NGUYEN** ; **ANTHONY M. WAAS**. A novel mode-dependent and probabilistic semi-discrete damage model for progressive failure analysis of composite laminates - Part I: Meshing strategy and mixed-mode law. *COMPOSITES PART C: OPEN ACCESS*, 01 November 2020, vol. 3, ISSN 2666-6820
- **MINH HOANG NGUYEN** ; **ANTHONY M. WAAS**. A novel mode-dependent and probabilistic semi-discrete damage model for progressive failure analysis of composite laminates - Part II: Applications to unnotched and open-hole tensile specimens. *COMPOSITES PART C: OPEN ACCESS*, 01 November 2020, vol. 3, ISSN 2666-6820

- Detailed experimental and numerical investigation of single-edge notched tensile cross-ply laminates. **MINH HOANG NGUYEN et al.** COMPOSITE STRUCTURES. ELSEVIER SCIENCE LTD, 08 October 2021, vol. 279
- Compressive damage modeling of fiber-reinforced composite laminates using 2D higher-order layerwise models. **NAGARAJ M. H. et al.** COMPOSITES PART B. ELSEVIER, 17 March 2021, vol. 215